# EUROPÄISCHE PATENTSCHRIFT

(11) **EP 2 325 601 B1**
(45) Veröffentlichungstag und Bekanntmachung des Hinweises auf die Patenterteilung: **30.09.2015**
(21) Anmeldenummer: 10005172.1
(22) Anmeldetag: 18.05.2010
(51) Int. Cl.: G01C 7/06, E21D 9/00

(54) **Messung unterirdischer Bauwerke, insbesondere beim unterirdischen Vortrieb, mit Fröschen**
Measurement of underground structures, in particular for underground tunnelling, having change plates
Mesurage de constructions souterraines, notamment lors de l'avancement souterrain, à l'aide d'embases crapaud

(30) Priorität: 09.01.2010 DE 102010004231; 09.01.2010 DE 102010004264; 26.05.2009 DE 102009022750
(43) Veröffentlichungstag der Anmeldung: 25.05.2011
(73) Patentinhaber: Emschergenossenschaft, 45128 Essen (DE)
(72) Erfinder: Kemper-Böninghausen, Rolf, 45359 Essen (DE)
(74) Vertreter: Kaewert, Klaus

(56) Entgegenhaltungen:
- DE-A1-102007 014 527
- JP-A- 5 099 670
- JP-A- 2003 075 149

## Beschreibung

Die Erfindung betrifft die Messung unterirdischer Bauwerke, insbesondere beim unterirdischen Vortrieb. Beim unterirdischen Vortrieb ist die Vermessung unerlässlich. Aber auch nach Fertigstellung eines unterirdischen Bauwerkes sind Vermessungen notwendig, um zum Beispiel eine Bauwerkssetzung zu ermitteln.

Unterirdischer Vortrieb kommt vor im Bergbau, im Kanalbau, im Tunnelvortrieb, im Rohrvortrieb, bei Unterführungen. Für den unterirdischen Vortrieb stehen verschiedene Verfahren zur Verfügung.

Schon der Bergbau kennt verschiedene Vortriebsverfahren. Dazu gehören zum Beispiel der Sprengvortrieb, der Schildvortrieb, der Messervortrieb und der Pressvortrieb. Bei jedem der Verfahren muss der Vortrieb eingemessen werden.

Dabei wird das Bauwerk vorzugsweise in jeder Richtung eingemessen/vermessen.

Im unterirdischen Kanalbau kommen zum Teil besondere Verfahren zum Einsatz, desgleichen für den Rohrvortrieb.

In einer Variante wird mittels einer Rohrpresse von einer Startgrube ausgehend ein Schneidrohr/Schneidschuh durch den Untergrund getrieben. Nach jedem Pressenhub wird die Presse in die Ausgangsstellung zurückgefahren, so dass ein zweites Rohrstück in der Startgrube vor der Presse positioniert werden kann und eine erneute Pressenbetätigung den Vortrieb des Rohrstückes bewirkt und das zweite Rohrstück das Schneidrohr voranschiebt.

Der Vorgang wiederholt sich mit jedem dritten Rohrstück wie auch mit jedem weiteren Rohrstück.

In einer anderen Variante wird vor dem sich bildenden Kanal Erdreich abgebaut und werden in dem entstehenden Hohlraum Tübbinge montiert. In beiden Varianten des Kanalbaus ist eine Einmessung/Vermessung des Vortriebs und der Rohre erforderlich. Beim Nachmessen wird die Abweichung des Kanalverlaufes von der durch die Planung vorbestimmten Lage und Höhe gemessen bzw. wird die Abweichung des Kanals von einem Dokumentationsstand des Kanals gemessen, dessen Beibehaltung gewünscht ist.

Beim Einmessen wird die gewünschte Planungslage des Kanals auf die Vortriebswerkzeuge für den Kanalbau übertragen.

Der Tunnelvortrieb ist dem Vortrieb im Bergbau am ähnlichsten, auch wenn die Tunnelquerschnitte anders sind als die Streckenquerschnitte im Bergbau. Im Tunnelvortrieb kommen die gleichen Verfahren zur Anwendung wie im Bergbau. Dementsprechend kommt auch hier eine Einmessung und Nachmessung wie beim Bergbau vor.

Der Rohrvortrieb ist in einigen Bereichen, insbesondere bei grösseren Abmessungen dem Tunnelvortrieb sehr ähnlich. Dementsprechend kommen beim Rohrvortrieb auch Vortriebsverfahren wie beim Tunnelvortrieb oder auch wie beim Kanalbau vor.

Unterführungen können je nach Abmessungen tunnelähnlich sein.

Dementsprechend kommen dann auch Messungen wie beim Tunnelbau vor.

Im Übrigen machen Erdbewegungen immer wieder eine Nachvermessung an unterirdischen Bauwerken notwendig.

Beim Vermessen des unterirdischen Bauwerks, insbesondere beim unterirdischen Vortriebs gibt es verschiedene Verfahren.

Herkömmlich findet eine geodätische Vermessung mit Tachymeter statt, die von Hand auf dem Bauwerksboden bzw. Kanalboden aufgestellt werden. Dabei kommen Stative zur Anwendung, die mit einer Höhenverstellung versehen sind.

Das Tachymeter ist ein Gerät, mit dem man Horizontalrichtungen, Vertikalwinkel und auch Schrägstrecken ermitteln kann. Mit ihm lassen sich Vermessungen schnell und mit grosser Genauigkeit durchführen.

Die elektronischen Tachymeter messen die Richtungen nach dem Zielvorgang selbsttätig. Zugleich werden elektronische Distanzmessungen durchgeführt. Dabei wird entweder nur die Laufzeit oder bei präziseren Tachymetern Laufzeit und Phasenverschiebung eines ausgesandten und im Zielpunkt reflektierten Lichtstrahls gemessen. Üblicherweise liegt das Licht der Trägerwelle im infraroten Bereich oder nahe dem infraroten Bereich. Die Reflexion des Lichtstrahls erfolgt üblicherweise in einem Prisma, vorzugsweise in einem retroreflektierenden Tripel-Prisma oder Tripelspiegel. Die Messwerte (Richtung und Distanz werden bei den zeitgemässen elektronischen Tachymetern vollautomatisch elektronisch bestimmt. Das kann über kombinierte/angeschlossene Rechner erfolgen. Je nach vorhandenen Programmen kann mit dem elektronischen Tachymeter eine zweidimensionale oder dreidimensionale Abbildung von Bauwerken stattfinden.
Neueste motorisierte Tachymeter sind mit einer Verstellmechanik und einer Antriebsmechanik versehen, welche das automatische Anvisieren des Tripelprismas/spiegels und eine Zielverfolgung erlaubt. Ausserdem sind diese Tachymeter programmierbar, so dass sie in genauer Folge vollautomatisch mehrere Punkte vermessen können.
Ein Tripelprisma ist ein Glaskörper, der vom plan ist und rückseitig drei zueinander in einem Winkel von 90Grad stehende unverspiegelte Fläche besitzt. Es reflektiert das Licht wie ein Spiegel, aber sehr viel verlustärmer.

In der DE 10 2007 014 527 wird darauf hingewiesen, dass in einem Tunnel nur sehr beengte Verhältnisse für eine Aufstellung der Messvorrichtung gegeben sind. Dabei wird in dieser Druckschrift von einem Stand der Technik mit ortsfesten Konsolen ausgegangen. Dies soll eine aufwendige Verschraubung und den Einsatz geeigneter Werkzeuge erforderlich machen. In dieser Druckschrift wird als Alternative zu dem ortsfesten Einbau von Konsolen vorgeschlagen, das Stativ bei einem Tübbingausbau in die Fugen zwischen zwei benachbarten Tübbingen einzuklemmen. Die Klemmkraft soll gegebenenfalls mit Schrauben/Federkraft/Hebeln verstärkt verstärkt werden.

Die Klemmung ist nur dort möglich, wo Fugen mit ausreichender Breite bestehen, die in der Lage sind, die Klemm-Mechanik aufzunehmen. Das ist nicht nur für die Fugendichtung von gravierendem Nachteil. Die Klemmung hat noch diverse andere Nachteile.

Die EP1408344 beschreibt ein Verfahren zur geodätischen Messung, bei dem die Tunnelwandung mit Laserscannern vermessen wird. Zugleich wird der Abstand des Laserscanners vom bestimmten Messpunkten gemessen. Daraus ergibt sich die Position des Laserscanners. Die Messwerte werden dann mit einem Rechner ausgewertet.
Nachteilig an dem Verfahren wird angesehen, dass der Laserscanner nur einen verhältnismässig kleinen Messbereich hat. Deshalb ist eine Vielzahl von Messungen erforderlich. Dieser Nachteil wirkt sich umso stärker aus, je länger die Strecke ist.

Die DE102005012107 entwickelt die geodätische Messung nach der EP 1408344 weiter. Dabei werden diverse, Positionspunkte des Lasers gemessen und als Fixpunkte festgelegt.

Die DE3733553 beschreibt ein lasergesteuertes Vortriebsschild. Zur Positionsbestimmung des Schildvortriebes dient ein elektrischer Reflektor, der Signale aussendet. Alle Werte werden zur Maschinensteuerung in einem Rechner verarbeitet.

Die DE 102004010114 beschreibt ein Messverfahren zur Steuerung von Vortriebsmaschinen. Dabei wird eine besondere Schwierigkeit bei der Kurvenpressung von Rohren gesehen, weil keine optische Gasse durch die Kurve besteht. Um gleichwohl eine Lasermessung durchzuführen, ist eine Messung nach Art eines Polygonzuges vorgesehen. Der Laser soll mit einer Zieltafel zusammen wirken. Dabei bildet der Laserstrahl die Sollposition der Vortriebsmaschine. Es wird die Zieltafel an der Vortriebsmaschine befestigt und die Vortriebsmaschine so bewegt, dass der Laserstrahl in dem Zielfeld der Zieltafel auftrifft. Dann hat die Vortriebsmaschine ihre Sollposition erreicht.

Eine ähnliche Lösung schlägt die DE4017833 vor. Dabei fmden für die Vermessung Theodolite Anwendung.

Die DE3120010 beschreibt ein Vermessungssystem für einen vorgepressten, gekrümmt verlaufenden Rohrstrang.

Vorn an dem Rohrstrang befindet sich ein Schneidschuh bzw. Schneidrohr. Zur Steuerung des Schneidschuhes werden dabei Lichtstrahlen und Fadenkreuze sowie Laser und Empfänger und Abtastvorrichtungen als Stand der Technik erwähnt.

Nach der DE3120010 soll bei gekrümmtem Rohrverlauf ein Polygonzug ausgemessen werden. Innerhalb des Polygonzuges werden die Messpunkte und Abtastsysteme in einem fest vorgegebenen Abstand angeordnet. Während des Vorpressens bleiben die Abstände der Messpunkte konstant. Dieser Verfahrensvorschlag bevorzugt Leuchtdioden als Messpunkte und eine Ultraschallmessung.

Die DE69103610 beschreibt auch ein Lasersystem mit Referenzpunkten. Diese Druckschrift geht von der sogenannten "NATM"Tunnelvortriebsmethode aus. Die Vortriebsmethode betrifft den

Sprengvortrieb. Beim Sprengvortrieb werden diverse Bohrungen in das Gebirge eingebracht, mit Sprengstoff gefüllt und verdämmt.

Damit durch die Sprengung ein vorbestimmter Gebirgsausbruch entsteht, sollen die Bohrungen mit Hilfe von Lasern vermessen und markiert werden. Der Laser wird von Hand bewegt, auch wenn ein Computer bei der Einstellung hilft. Die Markierungen werden von Hand aufgebracht.

Ausserdem wird eine Automatisierung bei der Vermessung vorgeschlagen. Dabei ist ein geodätisches Lasersystem vorgesehen. Zu dem System sollen gehören: eine Lasermesseinheit zur Durchführung der Abstands- und Winkelmessungen, ein Laserprojektor zum Lenken des Laserstrahls auf einen Abbaustoss, eine Steuereinheit zum Festlegen der Messpunkte auf der Grundlage der geodätischen Daten. Dabei soll die Lasermesseinheit unabhängig vom Laserprojektor arbeiten.

Die DE 2607280 beschreibt ein Lasermessgerät bei dem Lichtstrahlen mit Hilfe eines Prismas zerlegt und umgelenkt werden.

Die DE60734622 beschreibt gleichfalls Lasermessgeräte für Tunnelvortriebe. Die Laservorrichtung ist mit einer Kollimationseinrichtung zusammen.

Solche Einrichtung ist bei Lasern üblich, um den Laserstrahl zu bündeln. Darüber hinaus ist in dieser Druckschrift die Verwendung eines Prismas vorgesehen.

Neueste Lasertracker sind hoch präzise Messinsstrumente, die durch eine Kombination aus Winkel- und Distanzmessung die 3D-Punktkoordinaten eines Objektes erfassen. Die Distanzmessung erfolgt durch Laserinterferometer oder absolute Distanzmessung oder durch eine Kombination aus beidem.

Mit einem Laserscanner kann ein Laserstrahl erzeugt werden, der über einen rotierenden Spiegel auf die zu scannende Oberfläche projiziert wird. Aufgrund des Rotationsspiegels werden eine Unmenge von Messpunkten/Punktwolke erzeugt. Der Laserstrahl wird von der zu messenden Oberfläche reflektiert und trifft in Abhängigkeit der Entfernung zur Oberfläche des Objektes in unterschiedlichen Distanzen auf einen CCD-Chip auf. Die Distanzen zwischen dem Laser und den Punkten auf der Oberfläche des Objektes werden mittels Triangulationsverfahren bestimmt. Bestimmte Konturen des Objektes bilden sich als unterschiedliche Distanzen ab. Diese Daten können für eine anschliessende CAD-Datenerstellung genutzt werden.

### Aufgabe der Erfindung

Die Erfindung hat sich die Aufgabe gestellt, ein wirtschaftlicheres Vermessungssystem für unterirdische Bauwerke zu schaffen.

### Lösung der Aufgabe

Die Erfindung wählt von den diversen bekannten Verfahren ein Verfahren als Ausgangspunkt der Entwicklung aus, bei dem in dem unterirdischen Bauwerk feste Messpunkte angelegt werden. Dies erscheint im Verhältnis zu den Verfahren, bei dem nur gescannt und mit Computern gerechnet wird, an sich nicht zeitgemäss. Das heisst, die Erfindung hält an den überholt erscheinenden festen Messpunkten fest. Allerdings geht die Erfindung in diesem Punkt über den Stand der Technik hinaus, indem verstellbare und/oder montierbare und demontierbare Messpunkte geschaffen werden.

### Wahlweise finden Frösche Anwendung.

Frösche sind in der Geodäsie für die Aufstellung von Messlatten an sich bekannt.

In der Regel handelt es sich um metallene Platten mit Krallenfüssen, die bei der Handhabung einer Messlatte bei der Höhenmessung eine Abstützung für die Messlatte geben sollen. Insbesondere auf dem Erdreich fehlt es an einer standsicheren und rutschfesten Abstützung für die Messlatte. Der Frosch besitzt zumeist eine runde Erhebung, auf der die Messlatte dann aufgesetzt wird. Die Frösche sollen einen eindeutigen Messpunkt vermitteln.

Das Vermessungspersonal führt den Frosch mit sich.

Für die eigentlichen Messinstrumente finden die Frösche an sich keine Anwendung, weil die Messinstrumente auf Stativen aufgesetzt werden. Zumeist handelt es sich um verstellbare Stative, welche eine Ausrichtung der Messinstrumente erlauben. Nach der Erfindung finden die Frösche gleichwohl auf Messinstrumente wie Tachymeter und Prismen Anwendung.

Ausserdem stellt sich in einem Bauwerk wie einem Tunnel oder Kanal oder dergleichen die oben zum Erdreich beschriebene Problematik während der Erstellung des Bauwerkes nicht. Die Bauwerke besitzen üblicherweise eine feste und glatte Sohle, so dass sich dort nicht die Problematik stellt, welche die Anwendung eines Frosches nahe legt.

Gleichwohl sind in solchen Bauwerken nach der Erfindung Frösche vorgesehen.

Nach der Erfindung ist für jedes im Einsatz befindliche Messgerät (zum Beispiel Tachymeter und Prisma) vorzugsweise jeweils ein Frosch vorgesehen. Bei einem Tachymeter und zwei Prismen ergibt sich pro Messvorgang eine Froschzahl von drei. Denkbar ist auch eine Kombination von einzelnen Messgeräten, die in Wirkverbindung mit einem Frosch stehen, mit anderen Messgeräten, die sich auf andere Messpunkte als Frösche stützen.

Der Frosch wird zur erfindungsgemässen Aufstellung der Messinstrumente verwendet, obwohl die Bauwerkssohle von sich aus zur Aufstellung der Messinstrumente geeignet ist. Die Frösche bleiben zumindest solange im Bauwerk liegen, bis bei schrittweiser Vermessung ein Vermessungsschritt beendet ist.

Wahlweise bleiben die Frösche bei schrittweiser Vermessung für die Dauer von mehreren Vermessungsschritten im Bauwerk liegen. Das bedingt dann eine grössere Zahl von Fröschen. Nach der Erfindung ist vorzugsweise für jedes Messinstrument und Messgerät (Tachymeter, Prisma) jeweils ein Frosch vorgesehen. Somit ergibt sich pro Vermessungsschritt eine Froschzahl von drei.

Noch weiter bevorzugt bleiben die Frösche während der gesamten Vermessung vom Anfang des Bauwerks bis zum Ende des Bauwerkes im Bauwerk liegen. Dann entspricht die Anzahl der Frösche einer Anzahl von Standpunkten bei herkömmlichen Vermessungen mit Stativen oder bei der Vermessung nach einem anderen Vorschlag mit festen Konsolen. Die Anzahl der Standpunkte richtet sich nach der Trassierung der Kanal- bzw. Rohrachse/Bauwerksachse. Im engeren Sinn setzt sich eine Trasse aus den Trassierungselementen Gerade, Kreis und Übergangsbogen zusammen. Hinzu kommen Elemente für den vertikalen Verlauf der Trasse, zum Beispiel Längsneigungen(Gradienten) Quemeigungen und ihre Anpassung ans Gelände. Als Trassierungselemente im weitesten Sinne werden alle Grössen verstanden, die die Trassenführung beeinflussen, gleichgültig, ob sie nun geometrischer, bautechnischer oder betrieblicher Art sind. Die Trassierungselemente erlauben es, die Trassenfindung geometrisch, bautechnisch und betrieblich zu optimieren.

Der Vorteil des erfindungsgemässen Verbleibens der Frösche auf der Bauwerkssohle ist ihre Nutzung bei der Vermessung in überlappenden Vermessungsschritten und gegebenenfalls die Möglichkeit ihrer Nutzung für ein gewünschtes Nachmessen.

Das hat bei Tunneln und Kanälen und dergleichen nicht durch bekannte Vermessungsmarken nahe gelegen, die in dem Bauwerk bleibend befestigt werden. Die übliche Befestigung der Marken mit Bohrungen und Dübel ist im Bereich der Bauwerkssohle unerwünscht.

Demgegenüber eröffnen sich mit der erfindungsgemässen Verwendung von Fröschen wesentliche Handhabungsvorteile.

Neben den herkömmlichen metallischen Fröschen und den anders geformten metallischen Fröschen können auch Frösche aus Kunststoff und Frösche ohne Füsse Anwendung finden. Die metallischen Frösche besitzen ein übliches Gewicht. Das Gewicht hindert die Frösche an einem Verschieben, wenn die Frösche unbeabsichtigt angestossen werden.

Vorzugsweise wird das Gewicht der Frösche nach der Erfindung aber reduziert. Nach der Erfindung wird gleichwohl einem unbeabsichtigten Verschieben entgegengewirkt. Wahlweise sind die Frösche dazu an der Berührungsfläche mit dem Bauwerk klebrig ausgebildet. Das kann mit einem beidseitig klebenden Band erfolgen. Solche Bänder sind für Randdämmstreifen aus Kunststroffschaum bekannt. Solche Klebestreifen besitzen Kleber auf bituminöser Basis oder Acrylatkleber, die nach Kehren oder Fegen der Bauwerkssohle trotz des verbliebenen Restschmutzes haften. Gleichwohl sind die Klebebänder extrem preisgünstig und eignen sich hervorragend als Verbrauchsmaterial.

Ihre Handhabung ist leicht.

Vor dem Verkleben sind die Klebebänder an den Klebeflächen abgedeckt.

Zum Verkleben wird eine Abdeckung des Klebebandes abgezogen und der Klebestreifen auf die vorgesehene Fläche gedrückt. Nach dem Gebrauch lassen sich die Klebebänder wieder abziehen.

Vorzugsweise wird jeder Frosch mit einem Klebeband vorbereitet.

Zum Gebrauch des Frosches für die Vermessung wird die verbliebene Abdeckung abgezogen und der Frosch mit der klebrigen Unterseite auf die Bauwerkssohle gedrückt.

Der Frosch bleibt danach sicher in seiner gewählten Stellung an der Bauwerkssohle.

Die Klebestreifen machen den Frosch weitgehend unabhängig vom Gewicht, so dass für die Frösche ein vergleichsweise leichtes Material, auch Holz oder Spanplatte oder ein Holzersatzstoff, gewählt werden kann.

Soweit bei den Fröschen Füsse vorgesehen sind, kann sich die Anwendung der Klebestreifen auf die Unterseite der Füsse beschränken. Dann ergeben sich sehr kurze Klebebandabschnitte. Es ist von Vorteil, wenn auch kurze Klebebandabschnitte durch die Vermessungsmannschaft von einer Klebebandrolle geschnitten werden. Wahlweise können aber auch vorbereitete Klebestücke beigestellt werden.

Die Klebestreifen und Klebestücke lassen sich nach einmaligem oder mehrmaligem Gebrauch auf der Unterseite der Frösche erneuern.

Mit dem Klebestreifen eröffnen sich auch neue Formen für den Frosch.

Die Handhabung solch leichter Frösche ist für das Vermessungspersonal äusserst angenehm. Das Vermessungspersonal kann solche Frösche auch in grösserer Zahl leicht mit sich führen. Das macht solche Frösche unabhängig von dem erfindungsgemässen Vermessungsverfahren auch für andere Vermessungen interessant.

Die Handhabung der Frösche kann auch noch dadurch erleichtert werden, dass Abziehlaschen an den Klebestreifen vorgesehen sind. Die Abziehlaschen können durch ein überstehendes Ende des Klebestreifens gebildet werden.

Der Verlust eines solchen Frosches lässt sich wegen seiner geringen Kosten leicht verschmerzen.

Für den Messpunkt auf dem Frosch ist vorzugsweise eine farbliche Markierung vorgesehen.

Wahlweise finden auch Frösche aus flexibler metallischer Folie oder einem anderen flexiblen Material, vorzugsweise aus Kunststoff-Folie, Anwendung. Solche Frösche lassen sich leicht jeder Bauwerkssohle anpassen. Günstig ist dabei eine vollflächige Klebrigkeit der Folien an der Bauwerkssohlenseite. Solche Folien sind weder einem Befahren noch einem Begehen des Bauwerks hinderlich, während die anderen beschriebenen Frösche schon ein erhebliches Bauvolumen besitzen und im Bauwerk umfahren bzw. umgangen werden sollten.

Zu den Messeinrichtungen gehören zum Beispiel die oben beschriebenen Einrichtungen einschliesslich Messpunkten, insbesondere aber auch Tachymeter und Prismen sowie Kreisel-Messinstrumente für geodätische Entfernungsmessungen und Positionsbestimmungen.

Die Frösche mit üblichem Gewicht können nach der Erfindung vor der Vermessung im Bauwerk so verteilt werden, dass sie an jeder Messstelle griffbereit sind. Nach Möglichkeit sollen die Frösche die Arbeiten im Bauwerk vor und nach der Vermessung nicht stören. Günstig ist eine Aufhängung der Frösche an einer Seite des Bauwerkes.

Noch günstiger ist, die Aufhängung der Frösche an den Halterungen vorzunehmen, mit denen die Versorgungsleitungen, einschliesslich der Energieleitungen, und Entsorgungsleitungen im Bauwerk gehalten werden. Die Frösche können dort am wenigsten stören.

Für die Aufhängung der Frösche eignet sich zum Beispiel ein Haken.

Der Haken kann eine gerade oder eine gekrümmte Form besitzen.

Ausreichend ist, wenn der Haken mit geringer Schräge nach oben gerichtet ist. Die geringe Neigung stört beim Abnehmen der Frösche nicht, bietet aber schon eine erhebliche Sicherheit gegen unbeabsichtigtes Lösen. Bei Bedarf kann die Hakenform in weiten Grenzen, zum Beispiel durch Verstärkung der Hakenform, verändert werden, um noch mehr Sicherheit gegen ein unbeabsichtigtes Lösen zu gewinnen.

Die bekannten Frösche besitzen teilweise einen beweglichen Griff, der bereits eine Aufhängung ermöglicht.

Vorzugsweise sind die Frösche mit einer festen Öse versehen, deren Öffnungsweite dem Haken angepasst ist und das Aufhängen und Abnehmen der Frösche erleichtert.

Die bekannten Frösche besitzen eine runde Form. Die Abmessungen sind so gewählt, dass sie gerade für die Messlatten ausreichen.

Die Erfindung hat erkannt, dass die Handhabung der Frösche mit einer anderen Form leichter ist. Nach der Erfindung ist eine längliche Form, vorzugsweise eine abgerundete längliche Form vorgesehen.

Ausserdem kann nach der Erfindung ein fester Griff anstelle eines beweglichen Griffes an dem Frosch vorgesehen werden. Mit dem festen Griff lassen sich die Frösche leichter von den Haken nehmen.

Bei der Verwendung oben beschriebener anderer Frösche ist ein Mitführen der Frösche durch die Vermessungsmannschaft in weiteren Grenzen unproblematisch. Das gilt besonders für die folienartigen Frösche.

Die Frösche können in der Vertikalen liegen, welche durch die Mittelachse des Bauwerkes führt. Günstig ist für die Begehung/Befahrung des Bauwerkes, wenn die Frösche auf einer Seite des Bauwerkes liegen und viel Raum für die Begehung/Befahrung des Bauwerkes frei lassen.

In der Regel ist ausreichend, wenn der durch einen Frosch gebildete Messpunkt bei begehbaren/befahrbaren Kanälen und anderen begehbaren/befahrbaren unterirdischen Bauwerken in einem Abstand von 20 bis 70 cm von der Hohlrauminnenwand gebracht werden kann. Es können auch grössere Abstände gewählt werden,

Vorzugsweise liegt der Frosch in der Bauwerksmitte

Wahlweise liegen die Messpunkte nur an einer Seite der unterirdischen Bauwerke. Wahlweise liegen die Messpunkte aber auch an verschiedenen Seiten des Bauwerkes. Mit den verschiedenen Messpunkten kann der Refraktion im Bauwerk Rechnung getragen werden. Bei der Refraktion wird die Brechung von Wellen beim Durchgang durch Medien bezeichnet. Je nach Medium kann es dabei zu erheblichen Unterschieden kommen, die in der Geodäsie berücksichtigt werden.

Die Messpunkte können in Längsrichtung der Kanäle und anderen unterirdischen Bauwerken auf einer geraden oder anders verlaufenden Linie hintereinander liegen. Das ergibt sich zwangsweise, wenn die Messpunkte nur an einer Seite liegen. Wenn zugleich Messpunkte an mehreren Seiten liegen, so können auch mehrere Messpunkte auf einer gemeinsamen Umfangslinie des Kanals oder anderen unterirdischen Bauwerkes liegen.

Die Abstände der Messpunkte in dem Bauwerk werden vorzugsweise im Rohrverlegungsplan bei der Bauplanung festgelegt.

Je nach Region kann es vorkommen, dass zunächst unterirdische Räume ohne Ausbau fertig gestellt werden. Das setzt jedoch ein selbsttragendes Erdreich/Gebirge voraus.

Viel häufiger ist ein nicht selbsttragendes Erdreich/Gebirge.

Das selbsttragende Erdreich/Gebirge erlaubt es, zunächst unterirdische Räume im Wege des Vortriebes zu erstellen und erst anschliessend mit einem Ausbau zu versehen. Das bedingt die Vermessung während des Vortriebes.

Dabei müssen die Messpunkte bzw. die betreffenden Teile der Messeinrichtung/Vorrichtung in erfindungsgemässer Weise vor dem Ausbau eingebracht werden.

Bei nicht selbsttragendem Erdreich/Gebirge ist es üblich, gleichzeitig oder spätestens kurzfristig nachlaufend zum Vortrieb den Ausbau einzubringen. Das gilt zum Beispiel für den Ausbau mit Tübbingen, im Bergbau zum Beispiel für den Ausbau mit nachgiebigem Stahlausbau.

Der Vortrieb kann dabei jeglicher Art sein. Besonders häufig ist der Vortrieb mit Fräsmaschinen.

Bestimmte Vortriebsverfahren sind systembedingt mit gleichzeitigem Ausbau verbunden. Das gilt zum Beispiel für den oben erläuterten Pressvortrieb.

Sowohl bei gleichzeitigem Ausbau als auch bei nachlaufendem Ausbau können die Rohre mit Messpunkten in erfindungsgemässer Weise ausgerüstet werden. Beim Pressvortrieb wandern die Messpunkte mit den Rohrstücken/Rohrabschnitten mit fortschreitendem Ausbau.

Bei anderem Ausbau wie dem Tübbingausbau oder dem Stahlausbau im Bergbau bleiben die einmal vorgesehenen Messpunkte vorzugsweise erhalten. Das heisst, je nach Ausbau ergeben sich feste Messpunkte oder mit dem Ausbau wandernde Messpunkte.

Entsprechend der Planung muss die Vortriebsmaschine eingemessen werden. Danach ergibt sich beim Vortrieb ein Einstellungsbedarf/Steuerungsbedarf aufgrund von üblichen Abweichungen der Vortriebsmaschine von der Planungsposition. Für die Einstellung erfolgt nach der Erfindung eine Vermessung entlang der Messpunkte mit Hilfe üblicher Messwerkzeuge. Mit der Vermessung lässt sich die Lage, Höhe und Abmessungen der unterirdischen Bauwerke und die Richtung des Vortriebs bestimmen. Dabei können auch zwei oder mehr, zum Beispiel drei Zieleinrichtungen an der Vortriebsmaschine zum Einsatz kommen, so dass die Lage, Höhe und Vortriebsrichtung der Vortriebsmaschine eindeutig bestimmt werden kann. Zieleinrichtungen können zum Beispiel die bekannten Zieltafeln sein.

Für die Feststellung der Solllage und Sollhöhe des Bauwerks, der Rohrsohle, des Tunnels usw. kann auch das Einmessen der schon vor der Vortriebsmaschine eingebrachten Bauelemente ausreichen. Dabei kann es sich um die ersten bzw. letzten Einbauelement/Rohre handeln. Üblicherweise reichen mehrere Einbauelemente/Rohre an einem Ende für das Einmessen aus.

Das Einmessen kann auch mit neuen Messfahrzeugen erfolgen. Es kann mit einem Fahrzeug vermessen werden, vorzugsweise werden zwei Fahrzeuge verwendet, noch weiter bevorzugt drei Fahrzeuge.

Die Messfahrzeuge können Messprismen oder Messfolien oder andere Messinstrumente/Einrichtungen tragen. Mit den Messinstrumenten werden Messpunkte angezielt, Messwerte erzeugt und mit der Planung abgeglichen. Ein Messprisma wird zum Beispiel mittig an dem Messfahrzeug mit einer konstanten Höhe bezogen auf die Bauwerkssohle angebracht. Die tatsächliche Lage der Bauwerkssohle kann durch eine Libelle am Messfahrzeug definiert werden. Spielt die Libelle ein, so ist das Messprisma lotrecht über der Bauwerkssohle z. B. bei einem Vortriebsrohr.

Wahlweise können nach der Erfindung kontinuierlich oder diskontiunierliche Messungen vorgenommen werden.

Es können auch gleichzeitig oder nacheinander(nachlaufend) verschiedene Messungen vorgenommen werden. Die unterschiedlichen Messungen können sich ganz oder teilweise auf andere Messpunkte stützen. Das dient der Kontrolle der Messungen. Wenn unterschiedliche Messungen zum gleichen Ergebnis führen, so ist die Sicherheit sehr gross, dass die Messung richtig bzw. genau war.

Eine mögliche Kontrollmessung ist nach der Erfindung die Rückwärtsmessung, bei der nach Vervollständigung eines Bauwerks eine Nachvermessung dadurch stattfindet, dass von dem Fertigzustand der Baumassnahme zum Ausgangspunkt der Baumassnahme gemessen wird.

Für die erfindungsgemässen Messungen ist es von Vorteil, vorzugsweise mindestens drei Messgeräte zu verwenden. Das erlaubt eine Anordnung, bei der die Messgeräte hinter einander angeordnet sind. Zur Verlängerung der Messstrecke können weitere Messgeräte aufgebaut werden. Vorzugsweise findet eine schrittweise Vermessung des Bauwerkes statt. Die Messgeräte werden nach Durchführung eines ersten Vermessungsschrittes abgebaut und zum Beispiel um einen Froschstandpunkt versetzt, so dass der nächste Vermessungsschritt sich mit dem vorhergehenden Vermessungsschritt überlappt. Die Vermessungsschritte werden dann fortgesetzt, bis das gesamte entstandene Bauwerk vermessen ist.

Vorzugsweise werden Tachymeter und Prismengeräte als Messgeräte verwendet.

Dabei entstehen Messstrahlen, die durch die Prismen in definierter Weise gebrochen werden. Die Brechung der Messstrahlen kann mehrfach erfolgen, so dass die Messstrahlen von dem Prisma vollständig zum Tachymeter reflektiert werden. Daraus kann das Tachymeter die Position des Prismas bestimmen. Ähnliche Reflektionen können auch mit einem Reflektor auf Basis eines Spiegels erzeugt werden. Die Reflektion mit einem Spiegel ist im weiteren eingeschlossen, soweit von einem Prisma zur Reflektion des Messstrahles gesprochen wird.

Die Messstrahlen sind gerade.

Zugleich erlauben zeitgemässe Messgeräte eine Vermessung über erhebliche Entfernung, so dass in gerade verlaufenden Bauwerken zur Verlängerung der Messstrecke auch ein immer grösser werdender Abstand zwischen den Messgeräten in Betracht kommt bzw. der Vermessung nicht entgegensteht.

Etwas anderes ergibt sich bei kurvenfönnig/gekrümmt verlaufenden Bauwerken. Dort muss der Abstand der Messgeräte so reduziert werden, dass die Messgeräte einander im Bauwerk noch anvisieren können. In den kurvenförmig/gekrümmt verlaufenden Bauwerken ergeben sich winkelig/abgeknickt verlaufende Messstrecken.

Die beschriebenen Frösche können vorteilhafterweise auch zur Längsrichtung eines Bauwerkes zu zweit bzw. zu mehreren nebeneinander angeordnet werden. Dadurch ergeben sich verschiedene Messstellungen für die Messgeräte, so dass im Anschluss an eine Vermessung in einer Messstellung noch weitere Vermessungen in demselben Bauwerksabschnitt durchgeführt werden können und Messstrecken entstehen, die parallel zu der ersten Messstrecke verlaufen.

Von Vorteil kann sein, wenn die Messstrecken hin- und hergehend/zick-zackformig abgewinkelt und/oder einander kreuzend verlaufen. Das Hin- und Hergehende und das Kreuzende beschränkt sich dann auf den Hohlraum des Bauwerkes. Soweit im Weiteren von parallelen Messstrecken gesprochen wird, schliesst das ein, dass einzelne oder mehrere Messstrecken oder alle Messstrecken hin- und hergehend im Bauwerk verlaufen und/oder einander kreuzend im Bauwerk verlaufen.

Durch parallel verlaufende Messstrecken eröffnet sich über die damit verbundene Kontrolle eine hohe Sicherheit für eine richtige/genaue Messung.

Wahlweise zusätzlich zur parallelen Messung oder anstelle der parallelen Messung werden die Tachymeter zwischen zwei Prismen an mindestens zwei Standorten zur Messung genutzt. Auch das erhöht die Genauigkeit.

Vorzugsweise werden bei einfach(ohne Parallelvermessung) hergestellten Messstrecken im Wechsel Tachymeter und Prismengeräte eingesetzt. Es kann auch ein Tachymeter zusammen mit mehreren Prismengeräten zum Einsatz kommen. Dabei können die Prismengeräte nicht nur für die Totalreflexion am Messpunkt, sondern in anderer Ausbildung auch für eine Durchleitung bzw. Weiterleitung zu einem Messpunkt genutzt werden.

Wahlweise sind Tachymeter gleichzeitig als Prismengeräte ausgebildet oder mit Prismengeräten kombiniert. Die kombinierten Tachymeter und Prismengeräte eignen sich besonders für die Herstellung paralleler Messstrecken.

Soweit mehrere Prismengeräte vorgesehen sind, ist es von Vorteil, die Prismen zu codieren. Dazu können die Prismen mit einer Target-ID-Funktion versehen werden. Diese Funktion kann die gleiche sein wie bei der Zielsuche und Zielerkennung eines Trimble-Tachymeters. Die Target-ID sendet einen nicht sichtbaren Infrarotstrahl aus, auf den ein Code aufmoduliert ist. Dadurch erhält man eine eindeutige Identifizierungsmöglichkeit für diesen Zielstrahl und für das damit verbundene Ziel. Die Zahl der Codes ist in weiten Grenzen wählbar. Zum Beispiel können acht Codes wählbar sein. Entsprechend ist die Zahl der identifizierbaren Prismen. Wenn die Suche nach einem Prisma mit einem Tachymeter gestartet wird, so wird dann nach einem aktiven Zielstrahl gesucht, der einen bestimmten Code trägt. Empfängt der Sensor im Tachymeter ein solches Infrarotsignal, so decodiert er die aufmodulierten Information. Ist die empfangene Information mit der gesetzten Information identisch, so ist das richtige Ziel gefunden und erfolgt eine Scharfstellung auf das Prisma.

Differiert die aufmodulierte Information von der im Tachymeter gespeicherten Information oder ist keine Information aufmoduliert, so bleibt das Prisma bei der Suche unbeachtet. Auf diese Weise werden nur die richtigen/gewünschten Prismen von dem Tachymeter berücksichtigt.

Zu den üblichen Messgeräten gehören Tachymeter, Kreisel-Messinstrumente, Messprismen und andere geodätische Messgeräte, insbesondere laserbasierte Messgeräte und insbesondere mit Rechnerunterstützung, so dass notwendige trigonometrische Rechnungen auch während der Messung ablaufen können.

Der Vermessungskreisel dient der Bestimmung unabhängig gemessener Azimute. Hierbei wird das physikalische Grundprinzip ausgenutzt, dass sich die Erddrehung auf einen schnell rotierenden Kreisel in Form eines Richtmomentes auswirkt, welches versucht, die Kreiselachse parallel zur Drehachse der Erde auszurichten. Dieses Prinzip wird zur Bestimmung der geographischen Nordrichtung ausgenutzt. Es ist daher durch Richtungsbestimmung zu einer beliebigen Polygonseite möglich, das jeweilige Azimut der Polygonseite zu bestimmen. In diesem Zusammenhang ist von besonderer Wichtigkeit, dass die durch den Vermessungskreisel ermittelte Azimutrichtung lediglich von der Erdrotation abhängig ist.

Unter anderem gilt es, Horizontalwinkel, Vertikalwinkel und Entfernung zu messen. Diese Aufgaben können mit einzelnen aber auch mit Kombinationsgeräten erfüllt werden.

Vorzugsweise finden Fahrzeuge Verwendung, mit denen die Messgeräte von Messstelle zu Messstelle gefahren werden.

Im Unterschied zu anderen Messverfahren ergibt sich mit der erfindungsgemässen Fahrzeugnutzung bei der Messung eine wesentlich kürzere Messzeit.

Die Anzahl der Fahrzeuge ist nicht notwendigerweise identisch mit der Anzahl der Messgeräte. Jedes Fahrzeug kann auch zwei Messgeräte bzw. zwei Stative mit Messgeräten tragen. Vorzugsweise ist dann jeweils vorn und hinten an einem Fahrzeug ein Messgerät bzw. Stativ vorgesehen.

Vorzugsweise wird auch das vermessungstechnische Fachpersonal mit einem Wagen/Fahrzeug von Messstelle zu Messstelle gefahren. Das reduziert die körperliche Belastung erheblich.

Vorzugsweise werden die Messgeräte mit Stativen über den beschriebenen Fröschen ausgerichtet.

Günstig ist, wenn die Stative ein festes Höhenmass aufweisen, dann wird eine Höhenanpassung der Stative entbehrlich und verringert sich der Messaufwand. Vorteilhafterweise kann das einheitliche Höhenmass aller Stative genutzt werden, um die Stative für eine Kontrollvermessung oder für eine ergänzende Vermessung an verschiedene Messpunkte zu bringen, die bereits mit anderen Stativen vermessen worden sind. Dazu ist auch von Vorteil, wenn alle Stative mit gleichen Füßen/Beinen versehen sind und wenn die Füße/Beine eines Statives die Bauwerkssohle bei einer Kontrollvermessung oder für eine ergänzende Messung an einem Messpunkt an der gleichen Stelle berühren, wie die Füsse/Beine des Statives bei der vorhergehenden Messung. Dies wird wahlweise mit Hilfe von Schablonen erreicht, mit denen vor der ersten Messung die Stellung der Füsse/Beine eines Statives auf der Bauwerkssohle gekennzeichnet wird. Günstig ist, wenn mit den Schablonen zugleich die Lage des betreffenden Frosches auf der Bauwerkssohle gekennzeichnet wird. Anschließend können die Frösche an der gekennzeichneten Stelle abgelegt und die Stative an der gekennzeichneten Stelle abgesetzt werden. Für die Lotrechtstellung (Abloten) der Messgeräte über dem Frosch ist dann nur noch wenig Verstellung erforderlich. Vorzugsweise erfolgt diese Verstellung mit einem neuzeitlichen Dreifuss, der die Messgeräte trägt und mit einer Zielsuche und einer Zielerfassung versehen ist. Das reduziert die Tätigkeit des Vermessungspersonals.

Nach der Einmessung des Frosches werden die Messgeräte zum Beispiel in Form eines Tachymeters auf den Stativen betätigt, mit denen benachbarte Messgeräte in Form von Prismen auf anderen Stativen vermessen werden.

Die Frösche können nach der Vermessung an der Stelle verbleiben, wenn die Stative abgehoben und zu einer anderen Stelle im Bauwerk getragen werden, um mit einem anderen Frosch in gleicher Weise eine Vermessung vorzunehmen. An den verbleibenden Fröschen läßt sich die Vermessung nach einiger Zeit wiederholen, wenn ein Stativ zu dem Frosch zurückgetragen wird.

In anderen Ausführungsbeispielen wird die Stellung der Füsse/Beine eines Statives bei der ersten Benutzung eines Statives an einem Messstandort/Messpunkt mit Farbe oder in anderer Weise auf der Bauwerkssohle markiert.

In noch anderen Ausführungsbeispielen werden Frösche verwendet, die zugleich Markierungen für die Füsse/Beine tragen und/oder Aufstandsflächen für die Stative bilden.

Im Übrigen können die Stative dreibeinig sein wie herkömmliche Stative.

Von Vorteil kann darüber hinaus ein vierbeiniges Stativ sein. Solche Stative lassen sich gleichwohl in Bauwerken mit kreisförmigem bzw. rundem Querschnitt einsetzen, wenn die Stative die gleiche Höhe und wenn die Füsse/Beine die gleiche Aufstandsfläche aufweisen

Im Ausführungsbeispiel mit den Stativen, deren FüsseBeine unmittelbar auf der Bauwerkssohle stehen, sind die Füsse/Beine so bemessen, dass sie die Frösche übergreifen.

Es ist von Vorteil, wenn die Stative mit den Messgeräten mittels Wagen von Messstelle/Messpunkt zu Messstelle/Messpunkt transportiert werden.

Von Vorteil ist auch, wenn die Messgeräte heb- und senkbar in den Fahrzeugen angeordnet ist. Dabei können verschiedene Hubvorrichtungen eingesetzt werden. Dazu gehören auch Einrichtungen, wie sie von Hubwagen oder von Gabelstaplern oder von Ladebordwänden an Lkws bekannt sind. Die Ladebordwand beinhaltet eine Plattform, die geeignet ist, jedes herkömmliche Stativ oder auch andere Stative aufzunehmen, an denen eine Messvorrichtung oder ein Teil befestigt werden kann, das einen Messpunkt bildet.

Wie oben ausgeführt ist zwischen der Einmessung beim Vortrieb und der Nachmessung/Kontrollmessung zu unterscheiden. Beides kann mit den gleichen Vorrichtungen erfolgen. Die Kontrollmessung kann durch die beschrieben parallele Vermessung oder durch eine Rückwärtsmessung erfolgen.

Die eigentliche Messung erfolgt durch vermessungstechnisches Fachpersonal.

Die Messergebnisse werden vorzugsweise mit einem Rechner gesammelt und ausgewertet. Die Messergebnisse können sich auf einzelne Stellen des Bauwerkes beschränken oder die Bauwerke vollständig abbilden.

Vorteilhafterweise wird eine Nachvermessung nach der Erfindung einfacher.

Es können dabei einzelne Werte nachgemessen werden.

Bei der Nachvermessung kann auch eine Neuvermessung des Bauwerkes erfolgen. Aufgrund der Rechnerkapazität zeitgemässer Rechner ist eine vollständige Neuvermessung ein ohne weiteres tragbarer Aufwand.

Oder es findet eine teilweise Neuvermessung statt. Dabei kann die Vermessung ganz oder teilweise auf vorhergehenden Messungen aufbauen.

Das gleiche kann gelten, wenn der Vortrieb unterbrochen wird. Dann kann die Vermessung wieder von vom beginnen oder sich auf dem letzten Messpunkt aufbauen.

Gegebenenfalls kann die teilweise Vermessung einschliessen, dass wenige Zwischen-Messpunkte genutzt werden.

Wahlweise kann die erfindungsgemässe Messung auch genutzt werden, um im Vorlauf mit dem Vortrieb ein Einmessen vorzunehmen und im Rücklauf ein Nachmessen vorzunehmen. Wenn sich beim Nachmessen keine substantielle Abweichung der Messwerte gegenüber den Messwerten beim Vorlauf ergeben, so kann das eine Bestätigung der Richtigkeit des Einmessens sein. Andererseits wird mit wesentlichen Abweichungen der Vorlauf-Messwerte von den Rücklauf-Messwerten sofort ein Fehler des Bauwerkes deutlich. Für die Beteiligten ist das von grosser Bedeutung.

Bei der teilweisen oder vollständigen Vermessung kann auch auf Messpunkte ausserhalb des Bauwerkes Rückgriff genommen werden. Dahinter steht die Überlegung, dass die ausserhalb des Bauwerkes vorgesehenen Messpunkte nicht von einer Setzungsgefahr betroffen sind, wie ein neues Bauwerk.

Der oben vorgeschlagene Wagen zum Transport der Stative und Messgeräte besitzt vorzugsweise einen elektrischen, batteriebetriebenen Antrieb, so dass keine Verbrennungsgase aus dem Betrieb des Wagens anfallen. Der Wagen kann auch mit herkömmlichen Motoren betrieben werden, wenn die Verbrennungsgase mittels Absaugvorrichtung im Bauwerksbereich entfernt werden bzw. wenn das Bauwerk entsprechend belüftet wird.

Wahlweise ist der Wagen mit lenkbaren Rädern versehen. Das erleichtert Abladen/Aufladen des Fahrzeuges nach Lkw-Transport bzw. zum Lkw-Transport und das Einfahren in den Kanal. Im Kanal kann ein lenkbares Fahrzeug Einbauten bzw. herumliegendem Material ausweichen.

Allerdings ist auch die Rückwärtsfahrt zu berücksichtigen. Zumindest während der Vortriebsarbeit in der Bauphase kann das Fahrzeug den Kanal nicht durchfahren. Die Rückwärtsfahrt ist über längere Strecken sehr anstrengend, auch schwierig.

Nach der Erfindung ist deshalb wahlweise ein lenkbares Fahrzeug vorgesehen, das zwei Lenkungen besitzt, eine für die Vorwärtsfahrt und eine für die Rückwärtsfahrt.

Wahlweise ist auch eine Hebelsteuerung vorgesehen.

Dabei kann jeder Hebel mehrere Funktionen des Fahrzeugs steuern, zum Beispiel
a)Lenkung nach rechts und nach links oder
b)die Lenkung und die Geschwindigkeit oder
c)Lenkung, Geschwindigkeit und Vorwärts- und Rückwärtsfahrt.

Dabei kann der Hebel in verschiedenen Richtungen bewegbar sein, zum Beispiel:
d)schwenkbar in verschiedene Richtungen und/oder e)verschiebbar in verschiedenen Richtungen.

Jeder Bewegungsrichtung kann eine Steuerungsfunktion zugeordnet werden.

Bei Verwendung eines Sitzes für den Fahrer ist es von Vorteil, den Sitz drehbar anzuordnen, so dass der Sitz nach Drehen für die Rückwärtsfahrt genutzt werden kann. Anstelle einer drehbaren Sitzanordnung kommt auch ein Klappsitz mit zwei Sitzstellungen in Betracht, von denen die eine Sitzstellung für die Vorwärtsfahrt und die andere Sitzstellung nach Umklappen für die Rückwärtsfahrt vorgesehen ist.

Wahlweise kann das Fahrzeug auch mit einem Drehgestell versehen werden, so dass der Sitz mitsamt der Lenkung zur Rückwärtsfahrt umgedreht werden kann.

Wahlweise findet anstelle des lenkbaren Fahrzeuges ein gleisgebundenes Fahrzeug Anwendung. Auch für das gleisgebundene Fahrzeug sind zwei Lenkungen für Rückwärtsfahrt und Vorwärtsfahrt wie auch eine von Vorwärtsfahrt auf Rückwärtsfahrt umstellbare Lenkung von Vorteil. Das gleiche gilt hinsichtlich des Sitzes für den Fahrer.

Wahlweise ist das Fahrzeug als gleisfreies Fahrzeug dreirädrig ausgelegt. Dreirädrige Fahrzeuge haben besonders kleine Wendekreise, d.h. sind besonders beweglich.

Bei der relativ geringen Fahrgeschwindigkeit des Fahrzeuges kann auch eine Lenkstange anstelle eines Lenkrades am Fahrzeug Anwendung finden. Günstig sind auch kleine Abmessungen des Fahrzeuges. Das trägt den beengten Verhältnissen in unterirdischen Bauwerken Rechnung.

Günstig sind auch Ösen an dem Fahrzeugrahmen, um das Fahrzeug in den Pressschacht und wieder zurück zu heben. Die Ösen dienen dem Anschlagen eines Hubgeschirres.

Das Fahrzeug kann auch nur als Personenbeförderungsmittel für z. B. Baustellenpersonal genutzt werden, um die teilweisen langen Strecken zur Vortriebsmaschine zu überbrücken.

Wahlweise werden die Messgeräte auf den Stativen mit Messgeräten kombiniert, die in anderer Weise im Bauwerk gehalten sind. Die andere Halterung als die Halterung mit Stativen kann neben den Stativen oder anstelle der Stative Anwendung finden.

Die vorstehend beschriebene Vermessung kann unabhängig von der Frage der Halterung Messgeräte wie in den Ausführungsbeispielen erfolgen, bei denen die Messgeräte im Bauwerk/Kanal allein auf Stativen gehalten werden.

Von Vorteil ist eine lösbare Verklebung von Prismen im Bauwerk. Damit wird das Bauwerk nicht beeinträchtigt.

Zu den weiteren Montagemöglichkeiten gehört auch eine vorhergehende Anbringung einer Halterung als Zwischenstück im Bauwerk, an der die Prismen dann montiert werden können.

Die Halterung besteht dabei vorzugsweise aus Stahl und wird ihrerseits auf der Bauwerksfläche geklebt oder geklemmt oder in sonstiger Weise befestigt. Bei Verwendung von Stahl ist es möglich, die Prismen mit einem Magneten auszurüsten, so dass die Prismen lediglich mit der Halterung in Berührung gebracht werden müssen, um von dem Magneten in Messstellung gehalten zu werden. Die Anbringung wie auch das Abnehmen der Prismen verursacht nur minimalen Aufwand.

Die anklebbare Halterung kann die Form eines dünnen flexiblen Stahlbleches besitzen, das sich jeder Form der Bauwerksfirste oder der Bauwerksseitenwand anpasst. Das Stahlblech kann eine Dicke von wenigen Zehntelmillimetern besitzen, zum Beispiel eine Dicke von kleiner 0,3mm, vorzugsweise eine Dicke kleiner 0,2mm, noch weiter bevorzugt eine Dicke von 0,1 mm.

Das Stahlblech kann in Längsrichtung des Bauwerkes durchgehend verlegt werden.

Günstig ist die Verwendung von Stahlblechabschnitten. Für die Abschnitte ist von Vorteil, wenn bei der Bauwerksplanung ein Rohrverlegeplan erstellt wird und dabei zugleich die Stellen markiert werden, an denen ein Messpunkt für die Vermessung des Bauwerkes liegen soll. Dann können die Stahlblechabschnitte an den durch Markierung vorbestimmten Stellen im Bauwerk verklebt werden. Mit dem Rohrverlegeplan kann die Zahl der Vermessungsschritte und damit auch der Vermessungsaufwand minimiert werden. Dies ist ohne Verlegeplan üblicherweise weitaus schwieriger. Soweit die Zahl der Vermessungsschritte nicht von entscheidender Bedeutung ist, kann die Länge der Vermessungsschritte unter Erhöhung der Zahl der Vermessungsschritte nach Bedarf verringert werden.

Die Stahlbleche besitzen als Halterungen für die beschriebenen Prismen vorzugsweise eine Dicke kleiner/gleich 0,5m, weiter bevorzugt eine Dicke kleiner/gleich 0,4m und höchst bevorzugt eine Dicke kleiner/gleich 0,3m.

Die Stahlbleche besitzen vorzugsweise eine Breite kleiner/gleich 0,3m, noch weiter bevorzugt eine Breite kleiner/gleich 0,2m und höchst bevorzugt eine Breite kleiner/gleich 0,1m.

Die Bleche werden wahlweise von der Rolle abgezogen und abgelängt. Die Länge der Abschnitte ist vorzugsweise kleiner/gleich 1m, noch weiter bevorzugt kleiner/gleich 0,75m und höchst bevorzugt kleiner/gleich 0,5m.

Die Halterung für die Prismen kann bleibend oder lösbar im Bauwerk montiert werden. In dem Umfang wie die Prismen für einen Vermessungsschritt vorgesehen sind und in dem Umfang wie die Prismen für mehr als einen Vermessungsschritt im Bauwerk verbleiben sollen, wird die Zahl der Prismen erhöht.

Der Vorteil des erfindungsgemässen Verbleibens von Prismen ist ihre Nutzung bei der Vermessung in überlappenden Vermessungsschritten und gegebenenfalls die Möglichkeit ihrer Nutzung für ein gewünschtes Nachmessen.

Wahlweise sind die Prismen an der Berührungsfläche mit dem Bauwerk klebrig ausgebildet. Das kann mit einem beidseitig klebenden Band erfolgen. Solche Bänder sind für Randdämmstreifen aus Kunststoffschaum bekannt. Solche Klebestreifen besitzen Kleber auf bituminöser Basis oder Acrylatkleber, die nach Kehren oder Fegen der betreffenden Bauwerksfläche trotz des verbliebenen Restschmutzes haften. Gleichwohl sind die Klebebänder extrem preisgünstig und eignen sich hervorragend als Verbrauchsmaterial. Ihre Handhabung ist leicht

Vor dem Verkleben sind die Klebebänder an den Klebeflächen abgedeckt.

Zum Verkleben wird eine Abdeckung des Klebebandes abgezogen und der Klebestreifen auf die vorgesehene Fläche gedrückt. Nach dem Gebrauch lassen sich die Klebebänder wieder abziehen.

Vorzugsweise wird jedes Prisma mit einem Klebeband vorbereitet.

Zur Montage eines Prismas tür die Vermessung wird die verbliebene Abdeckung abgezogen und das Prisma mit der klebrigen Unterseite auf die vorgesehene Bauwerksfläche gedrückt. Das Prisma bleibt danach sicher in seiner gewählten Stellung an der Bauwerksfläche.

Es ist von Vorteil, wenn auch kurze Klebebandabschnitte durch die Vermessungsmannschaft von einer Klebebandrolle geschnitten werden. Wahlweise können aber auch vorbereitete Klebestücke beigestellt werden.

Die Klebestreifen und Klebestücke lassen sich nach einmaligem oder mehrmaligem Gebrauch an den Prismen erneuern.

Die Handhabung der Prismen kann auch noch dadurch erleichtert werden, dass Abziehlaschen an den Klebestreifen vorgesehen sind. Die Abziehlaschen können durch ein überstehendes Ende des Klebestreifens gebildet werden.

Soweit geklebte Halterungen vorgesehen sind, an denen die Prismen mit Magnetkraft gehalten werden können, kann die Klebung auf eine bestimmte Zeit, temporär, oder auf unbestimmte Zeit, bleibend, ausgelegt werden. Für eine temporäre Halterung sind die beschriebenen Klebebänder geeignet.

Für eine bleibende Klebung sind Baukleber wie Polyurethan-Kleber geeignet. In der Zeichnung sind verschiedene Ausführungsbeispiele dargestellt.

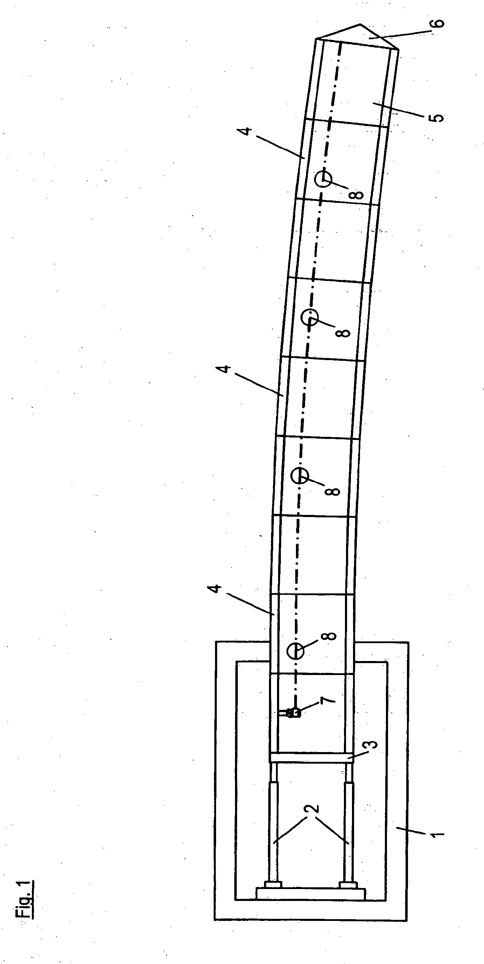

Fig. 1 zeigt einen Pressvortrieb für unterirdisch zu verlegende Kanalrohre. Zu dem Pressvortrieb gehören:
ein Pressschacht 1
eine darin angeordnete hydraulische Presse 2
ein Druckring 3
diverse Rohrstücke 4
ein Vortriebsschild 6

Die verschiedenen Rohrstücke 4 bilden im Ausführungsbeispiel ein Kanalstück

Die Krümmung entsteht durch entsprechende Steuerung des Vortriebsschildes 6.

Zur Steuerung ist eine Laserstrahlsteuerung vorgesehen. Dabei ist ein Laserstrahler 7 vorgesehen.

Der Laserstrahler 7 wird an einem Anfangs-Messpunkt im Pressschacht zu Beginn des Bauvorhabens eingesetzt, um den aus dem Pressschacht austretenden Schild 6 richtig zu lenken.

Aufgrund der grossen Länge des vorgesehenen Kanals wird der Pressvortrieb im Ausführungsbeispiel durch eine als Fräse ausgebildete Vortriebsmaschine 5 unterstützt.

Im Ausführungsbeispiel ist der Vortriebsschild gegenüber der Vortriebsmaschine gelenkig angeordnet und mit mehreren Hydraulikzylindern gehalten. Diese Zylinder werden bei rotierendem Vortriebsschild mit rotierenden Fräsern solange betätigt, bis der Vortriebsschild 6 und die Vortriebsmaschine die richtige Richtung eingenommen haben.

Sobald der Pressenhub ausreicht, um ein Rohrstück 4 zwischen der Vortriebsmaschine 5 und der Presse einsetzen zu können, erfolgt das und setzt sich der Pressvorgang fort. Dabei wird zu einem passenden Zeitpunkt erneut gemessen, ob die Vortriebsmaschine von der Plan-Linie abweicht.

Dabei ist im Ausführungsbeispiel die Krümmung so gering, dass die Vortriebsmaschine unmittelbar mit dem Laser anvisiert werden kann. Nachdem weitere Rohrstücke 4 eingesetzt und verpresst worden sind und der Abstand zu der Vortriebsmaschine so gross geworden ist, dass die Messgenauigkeit leidet, wird ein Messpunkt 8 in einem der Rohre 4 eingerichtet bzw. wahrgenommen. Von dem Messpunkt 8 aus wird die Vortriebsmaschine dann erneut anvisiert und entsprechend dem Laserstrahl ausgerichtet.

Das wiederholt sich mit weiteren eingezeichneten Messpunkten 8.

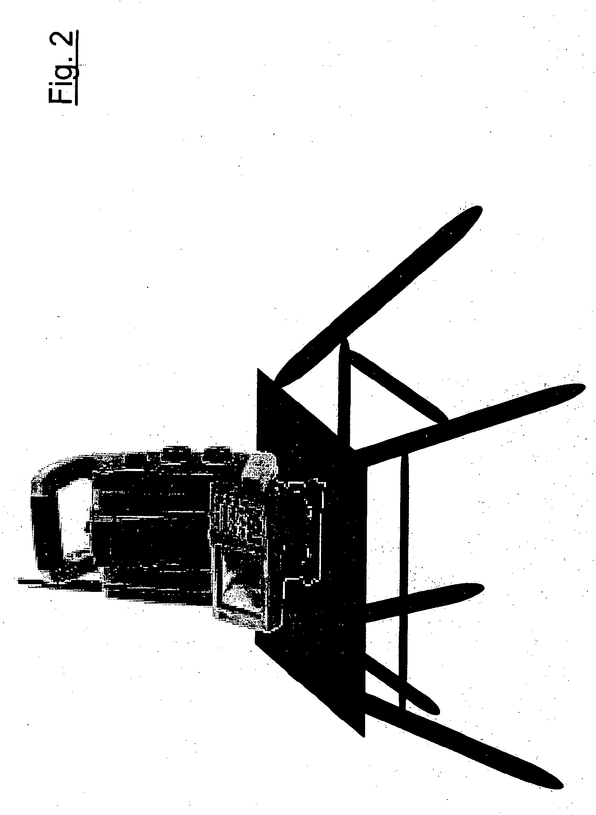

Fig. 2 zeigt eine Messvorrichtung für eine erfindungsgemässe Messung mittels Fahrzeug. Dabei trägt das Fahrzeug ein erfindungsgemässes Vierbeinstativ und einen handelsüblichen Tachymeter als Messgerät. Im Ausführungsbeispiel handelt es sich um ein Gerät mit der Produktbezeichnung Trimble.

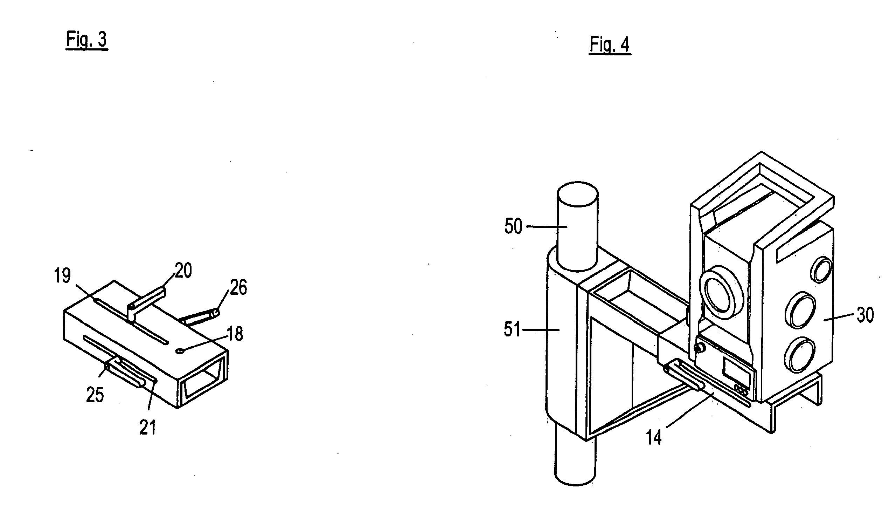

Fig. 4 zeigt gleichfalls eine Messvorrichtung für eine erfindungsgemässe Messung mittels Fahrzeug. Dabei trägt das Fahrzeug eine Konsole, in Messfunktion mit einem handelsüblichen Tachymeter als Messgerät. Im Ausführungsbeispiel handelt es sich um ein Gerät mit der Produktbezeichnung Trimble. Das Messgerät 30 ist aus zeichnerischen Gründen um 90Grad versetzt dargestellt. In Wirklichkeit ist im Ausführungsbeispiel vorgesehen, dass die Optik des Messgerätes in Längsrichtung der Konsole 14 gerichtet ist und von der Konsole weg in Richtung einer Vorausfahrt des Fahrzeuges weist.

Mit der Bauart Trimble lassen sich passive Ziele mit einer aktiven Ziel-Identifikation verfolgen. Das Instrument erfasst und verfolgt zahlreiche konventionelle Prismen und Ziele auch auf grosse Entfernung.

Die Ziel-Identifikation sichert das Anvisieren des richtigen Zieles. Dadurch können auch mehrere Prismen im Messgebiet zum Einsatz kommen.

Das Gerät besitzt über Servomotoren und Winkelsensoren, ferner eine Fehlerkompensation.

Das Gerät besitzt einen internen Rechner für die vorstehend beschriebenen Aufgaben, ausserdem eine eigene Stromversorgung und eine drahtlose Fernübertragung von Daten. Dies kann genutzt werden, um die Arbeit an einem ausserhalb des Kanals stehenden Rechner mitzuverfolgen.

Im Übrigen ist das Messgerät mittels eines Dreifusses auf der Konsole aufgestellt, der das Messgerät in eine lotrechte Stellung über dem Messpunkt des Frosches steuern kann. Ein geeigneter Dreifuss ist zum Beispiel der Automatik-Dreifuss AD-12 von GEO Laser. Dieser Dreifuss ist kombiniert mit einem Laser, welcher durch Verbindung mit Gehäuse des Messgerätes bei dessen vertikaler Ausrichtung gleichfalls vertikal steht. Im Ausführungsbeispiel wird die Konsole von Hand solange verstellt, bis der Laser genau auf den Messpunkt des Frosches zeigt. In anderen Ausführungsbeispielen kann das Messgerät den genau senkrechten Laserstrahl erzeugen und ist der Frosch mit einem Reflektor versehen und erfolgt die Ausrichtung auf den Frosch mit einer automatisch gesteuerten Mechanik.

In der Messstellung nach Fig. 4 steht die Konsole 14 mit der Stange 50 auf der Bauwerkssohle und stützt sich das Fahrzeug über zwei weitere nicht dargestellte, ausgefahrene und beabstandete Stützen an der Bauwerkssohle ab. Die Stützen liefern eine stabile Lage für das Fahrzeug. Im Ausführungsbeispiel werden die Stützen von Hand bewegt und in der Stützstellung durch Klemmung arretiert.

Desgleichen ist eine Arretierung der Konsole in der Messstellung vorgesehen Dabei werden Hebel 20,25 und 26 und zugehörige Arretierungs- und Klemmschrauben verspannt.

Die Fig. 3 zeigt die Konsole 14 in zusammengeschobenem Zustand. Die Konsole 14 wird nach der Beendigung des Messvorganges zusammengeschoben, um das Fahrzeug manövrierfähiger zu machen.

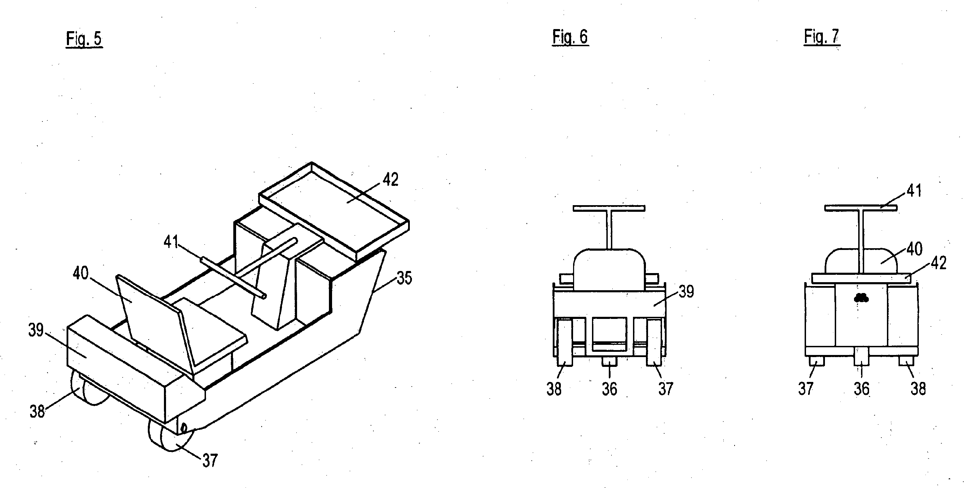

Die Fig. 5 bis 7 zeigen ein erfindungsgemässes Fahrzeug.

Das Fahrzeug ist dreirädrig, mit zwei Hinterrädern 37,38 und einem Vorderrad 36. Die Hinterräder 37,38 sind mit einem Elektroantrieb versehen.

In einem anderen Ausführungsbeispiel ist ein vierrädriges Fahrzeug vorgesehen.

Die Antriebsbewegung kann elektrisch geregelt werden, im Ausführungsbeispiel von 0 bis 10km pro Stunde.

Der Antrieb wird von einer Batterie gespeist, die in einem Batteriekasten 39 angeordnet ist.

Der Batteriekasten 39 ist mit dem Fahrzeugrahmen 35 verbunden. Vorn befindet sich an dem Fahrzeugrahmen 35 eine Tragfläche 42 zum Transport von Messgeräten und Material.

Ferner gehört zu dem Fahrzeug eine Lenkstange 41 als Lenkung. Die Lenkstange 41 ist drehbeweglich in dem Fahrzeugrahmen 35 gehalten und mündet in eine Gabel, in der das Rad 36 gehalten ist.

Schliesslich ist noch ein Schalensitz für den Fahrer im Fahrzeugrahmen vorgesehen.

Nach Fig. 4 gehören zu der beschriebenen Konsole eine Führungsstange 50 eine Führung 51 und eine nicht dargestellte Befestigung an der Tragfläche 42 des Fahrzeugs.

Die Führungsstange 50 verläuft im dargestellten Ausführungsbeispiel entsprechend der Stellung des Fahrzeuges vertikal und ist an beiden Enden an der Tragfläche 42 bis dem Fahrzeug befestigt.

Die Führungsstange ist im dargestellten Ausführungsbeispiel einteilig, in anderen Ausführungsbeispielen ist die Stange teleskopierbar, um die Stange auf die Kanalsohle aufstossen zu lassen und um die Stange zugleich für eine Höhenmessung nutzen zu können.

Zwischen beiden Stangenenden kann die Führung 51 im Ausführungsbeispiel zur Einstellung des Messgerätes 30 auf und ab bewegt werden. Ferner ist die Führung 51 auf der Stange schwenkbar, so dass auch durch Verschwenken eine Einstellung vorgenommen werden kann.

Die weitere Einstellung in Tunnellängsrichtung erfolgt durch Einschieben und/oder Ausziehen der Konsole 14.

Nach jeder Einstellung erfolgt eine Arretierung der Führung bzw. Konsole. Mit der dargestellten Vorrichtung ist eine einfache Einstellung von Hand gegeben.

Die Einstellung von Hand ist in anderen Ausführungsbeispielen durch eine Einstellung mit einer Hydraulikanlage ersetzt worden.

Im Ausführungsbeispiel sind für eine Messung 3 Fahrzeuge im Einsatz. Neben dem Fahrzeug, das in dargestellter Form das Messgerät trägt, sind noch ein Fahrzeug, das Prismen trägt und den Laserstrahl des Messgerätes umlenkt, und ein weiteres Fahrzeug mit einem Stativ vorgesehen, das in Verbindung mit einem festen Messpunkt an der Kanalsohle von dem Messgerät durch die beschriebenen Prismen hindurch anvisiert wird.

Das erfindungsgemässe Fahrzeug arbeitet im Ausführungsbeispiel mit einem zweiten, gleichen Fahrzeug zusammen, das gleichfalls ein Trimble-Messgerät trägt.

Beide Fahrzeuge fahren in Schritten durch den Kanal. Während jeden Schrittes bleiben die Fahrzeuge in Sichtweite.

Jeder Schritt ist zugleich ein Vermessungsschritt.

Dabei überlappen sich zwei einander folgende Schritte wie folgt: Beide Fahrzeuge werden im Abstand voneinander angehalten.

Im Ausführungsbeispiel werden von den Fahrzeugführern nach dem ersten Halt Folien als Frosch mit einem darauf gedruckten Messpunkt auf die Kanalsohle geklebt und findet eine Vermessung an jedem Frosch in der oben beschriebenen Form statt.

Nach der Vermessung fahren beide Fahrzeuge weiter. Das hintere Fahrzeug fährt allerdings nur bis zu dem vom vorderen Frosch, um diesen für die nächste Vermessung zu benutzen.

Dagegen fährt das vordere Fahrzeug ein Wegstück vor, welches den nächsten Vermessungsschritt definiert und anhält.

Dort wird wiederum von dem Fahrzeugführer des vorderen Fahrzeuges ein neuer Frosch aufgeklebt. Anschliessend findet eine neue Vermessung statt.

Nach dem neuen Vermessungsschritt setzt sich die Vermessung in gleicher überlappender Weise fort.

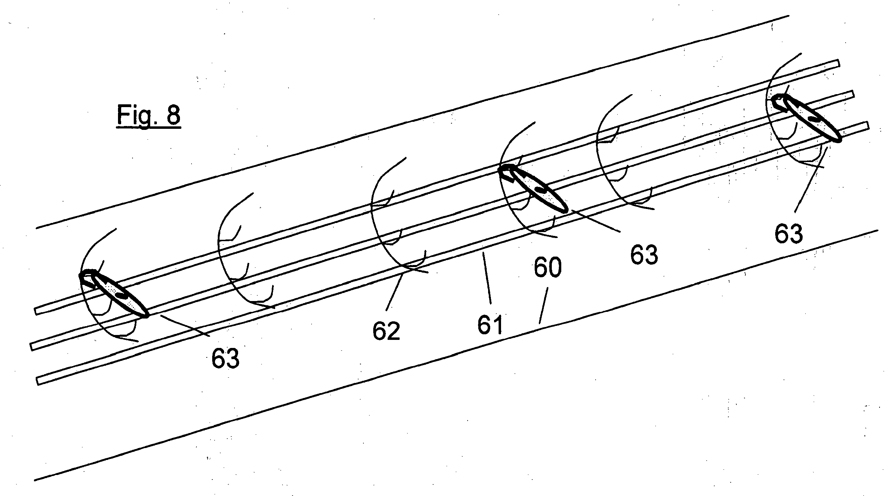

Fig. 8 zeigt ein anderes Ausführungsbeispiel mit einem Kanal 60

Der Kanal 60 zeigt Versorgungsleitungen 61, die mit Hilfsmitteln 62 gehalten sind. An den Halterungen sind herkömmliche Frösche 63 vorgesehen.

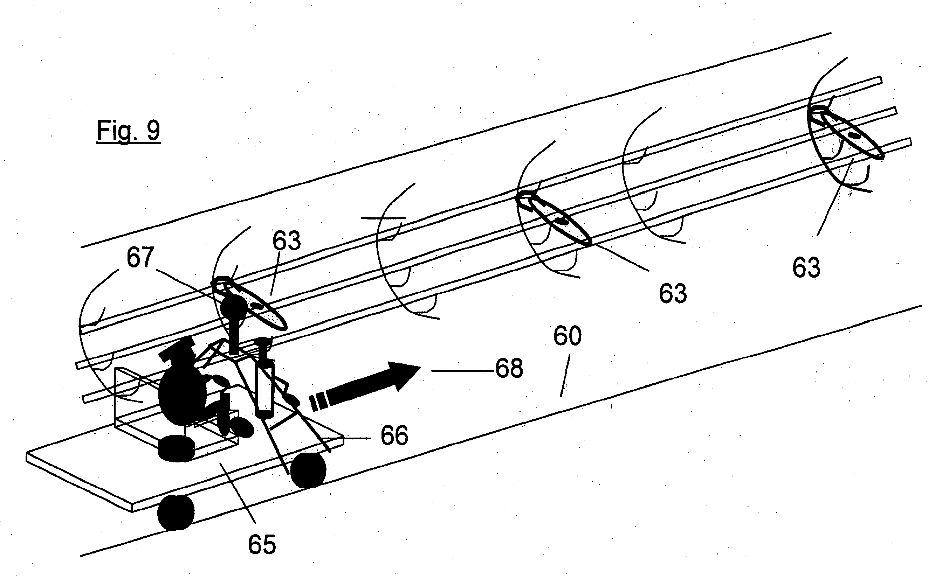

Zur Vermessung werden nach Fig. 9 bis 11 vierrädrige Fahrzeuge 65 und 70 in den Kanal 60 gefahren. Die Fahrtrichtung ist in Fig. 9 mit 68 bezeichnet.

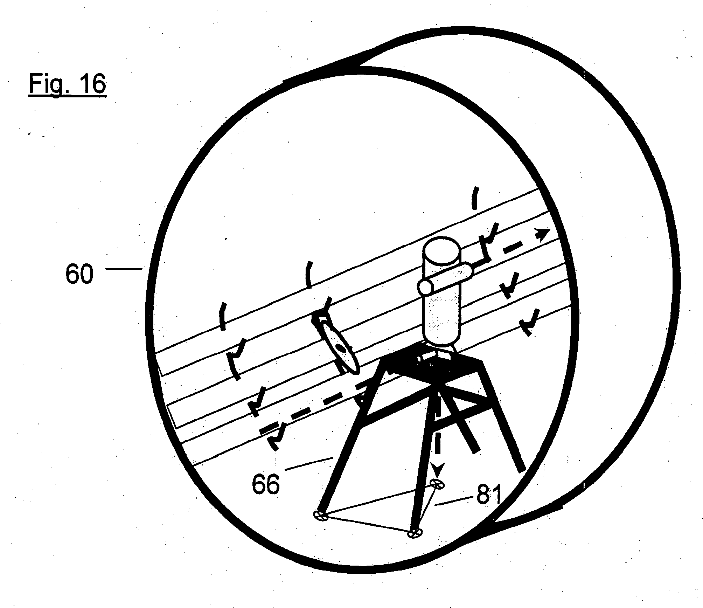

Jedes Fahrzeug trägt dabei ein vierbeiniges Stativ 66. Jedes Stativ ist heb- und senkbar gehalten und dadurch auf der Kanalsohle absetzbar und von der Kanalsohle wieder anhebbar. Die Stative 66 der Fahrzeuge 65 tragen jeweils ein Prisma 67. Das Stativ 66 des Fahrzeuges 70 trägt ein Tachymeter 71. Das Stativ 66 ist in Fig. 16 in einer Einzelansicht ohne Fahrzeug und zusammen mit einer Schablone 81 dargestellt. Die Schablone 81 besteht aus einer auf die Bauwerkssohle aufgeklebten Folie, die am Ende der Vermessungsarbeiten wieder abgezogen werden kann.

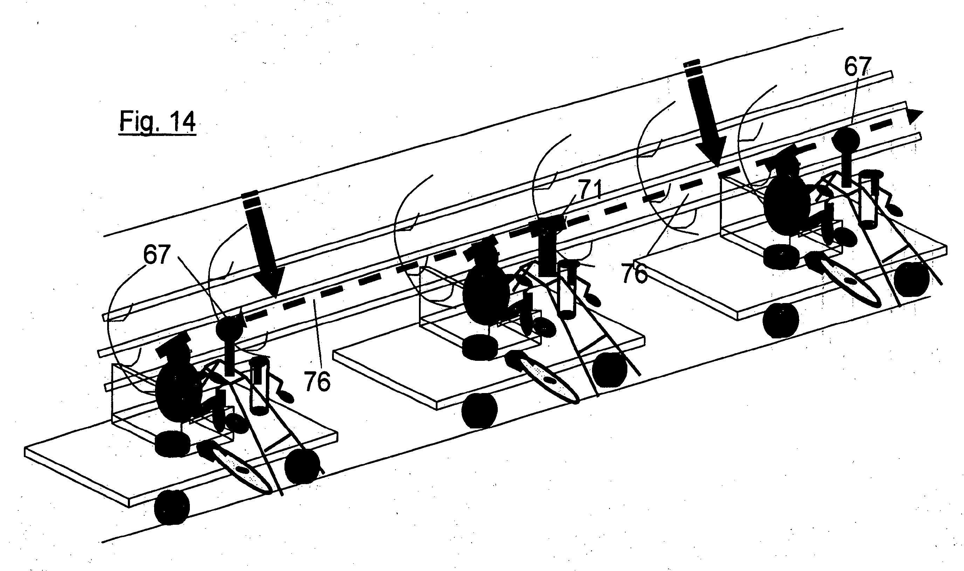

Für eine geodätische Messung werden die Fahrzeuge gemäss Fig. 9 bis 14 in den Kanal gefahren, bis jedes Fahrzeug einen Frosch 63 erreicht hat. Dann halten die Fahrzeuge an. Nach dem ersten Halt werden die an den Haken der Versorgungs- und Medienleitungen befindlichen Frösche von den Haken abgenommen und auf die Rohrsohle gelegt.

In anderen Ausführungsbeispielen ist es günstig, die Frösche durch das Baustellenpersonal bei deren Durchlaufen der Rohre (z.B. zur bzw. von der Vortriebsmaschine) auf die entsprechenden Sohlpunkte legen zu lassen. Das kann zu einer noch schnelleren Vermessung führen.

Die Positionen, an denen die Frösche abgelegt werden, sind im Ausführungsbeispiel in einem Rohrlegungsplan vorgeplant. Von Vorteil ist, die Positionen der Frösche bereits in den Rohren vor deren Einbau zu markieren bzw. anzuzeichnen. Vor dem Einbau heisst beim Rohrpressvortrieb: vor dem Ablassen der Rohrstücke in den Schacht

In anderen Ausführungsbeispielen, bei denen eine Vermessung mit Fröschen und Stativen erfolgt, kann in gleicher Weise wie bei der Verwendung von Fahrzeugen vorgegangen werden.

Von Vorteil ist, auf der Bauwerkssohle Markierungen für die Frösche anzubringen.

Die Anbringung von Markierungen für Frösche wird im Ausführungsbeispiel mit Schablonen durchgeführt.

Im Ausführungsbeispiel wird auch die Position der Füsse des Statives auf der Bauwerkssohle markiert. Das gilt für jede Art von Stativen.

Nach dem Halt werden die Stative auf die Rohrsohle abgesetzt. Dabei bemüht sich das Vermessungspersonal um ein Absetzen auf den Markierungen für die Füsse der Stative. Anschliessend werden die Stative auf die Messpunkte der Frösche 63 ausgerichtet. Zum Ausrichten sind dann lediglich geringe Verschiebungen der Messeinrichtungen erforderlich. Danach kann eine übliche geodätische Vermessung mit dem Tachymeter und den beiden Prismenvorrichtungen stattfinden.

Die vorbeschriebene Vermessung stellt einen Vermessungsschritt dar.

Nach dem Vermessungsschritt bleiben die Frösche liegen und werden die Stative angehoben und mit den Fahrzeugen soweit vorgefahren, dass das in Fahrtrichtung letzte Fahrzeug an dem in der Ansicht mittleren zuvor gelegten Frosch angelangt ist. Das mittlere Fahrzeug fährt vor, bis es an dem zuerst gelegten Frosch angelangt ist. Das erste Fahrzeug bleibt in Sichtweite, hält an. Es wird ein neuer Frosch abgenommen und auf der Kanalsohle abgelegt. Anschliessend findet ein Vermessungsschritt wie zuvor beschrieben statt.

Die Vermessungsschritte setzen sich bis zum Ende des Kanals fort. Dabei bleiben die Frösche liegen. Die Ergebnisse lassen sich mit den zuvor erzielten Messergebnissen vergleichen, so dass durch die Rückwärtsvermessung eine Kontrolle der Hinmessung erfolgen kann.

Die entstehenden Vermessungsschritte überlappen sich jeweils in zwei Messstellen.

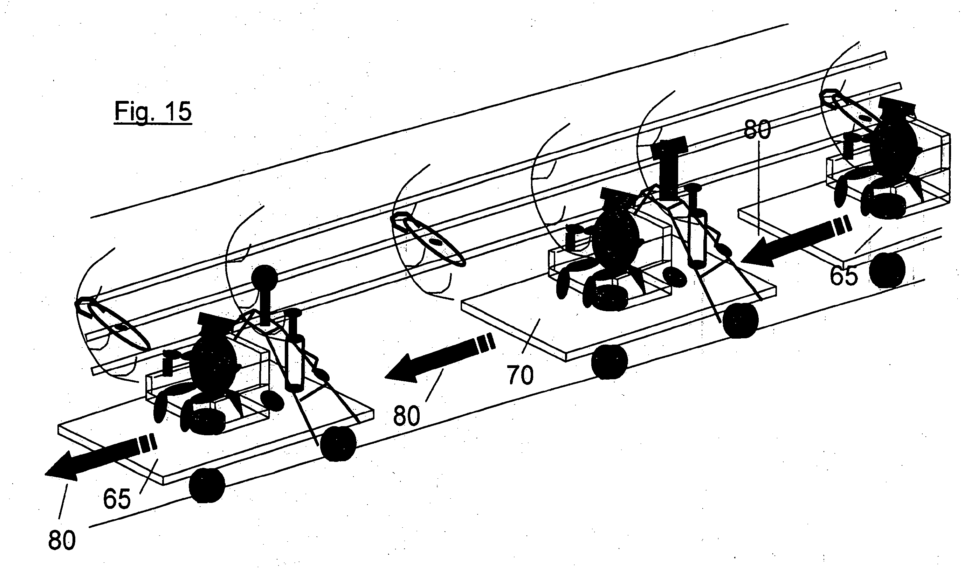

Fig. 15 zeigt, wie die Fahrzeuge nach vollständiger Vermessung zurückfahren. Dabei werden die Frösche wieder in der ursprünglichen Form aufgehängt.

In einem anderen Ausführungsbeispiel findet eine Rückwärtsvermessung statt. Das heisst, während der Rückwärtsfahrt findet eine Vermessung entsprechend der Vermessung auf der Vorwärtsbewegung statt. Allerdings bleiben die Frösche nicht nach der Vermessung liegen, sondern werden die Frösche wieder aufgehängt. Die Rückwärtsfahrtrichtung ist mit 80 bezeichnet.

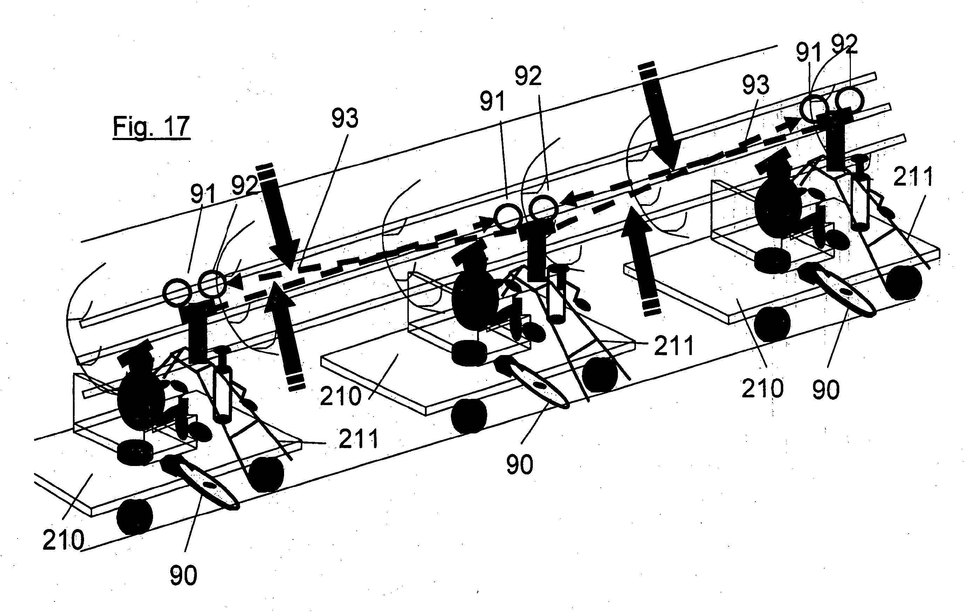

Fig. 17 zeigt ein Ausführungsbeispiel in unmaßstäblicher Darstellung in Zusammenhang mit Fahrzeugen 210 und den darauf sitzenden Fahrzeugführern, welche die Vermessung durchführen. Dabei ist eine Kurbel als Hubvorrichtung gezeigt. Die Kurbel wirkt über ein Ritzel auf eine Zahnstange, so daß mit einer Drehung in der einen Richtung eine Hubbewegung und mit einer Drehung in der anderen Richtung eine Senkbewegung erreicht werden kann.

Mit der Kurbel sind die mit 211 bezeichneten Stative auf der Bauwerkssohle abgesetzt worden. Im Ausführungsbeispiel werden die Frösche 90 nach Absetzen der Stative auf die Bauwerkssohle gelegt. Mit der Hand können die Frösche ohne weiteres grob auf das Tachymeter 92 ausgerichtet werden. Danach kann jedes Tachymeter mit dem oben beschriebenen Laser fein auf den zugehörigen Frosch ausgerichtet werden.

Nach der Ausrichtung des Tachymeters auf die Frösche 90 findet mit den Messgeräten eine Vermessung von jedem Messpunkt aus statt. Die Messgeräte nehmen dabei die Positionen 91 und 92 ein. Es entstehen sich kreuzende, parallele Messungen 93 und 94.

Der Vorteil ist, dass mit der einen Messung die andere Messung kontrolliert werden kann. Nach der Vermessung werden die Stative 211 wieder mit der Hubvorrichtung angehoben, um die Stative mit den Meßgeräten in der durch die verschiedenen Messschritte bestimmten Vermessungsrichtung weiterzutransportieren.

Fig. 17 zeigt überdies ein Zusammenwirken mit einem in der Ansicht weiteren, rechts angeordneten Fahrzeug 210 mit Stativ 211 und Messgeräten 91 und 92. Mit dem weiteren Fahrzeug kann die Vermessung beschleunigt werden, weil zwei Vermessungsschritte zu einem Vermessungsschritt zusammengefaßt werden.

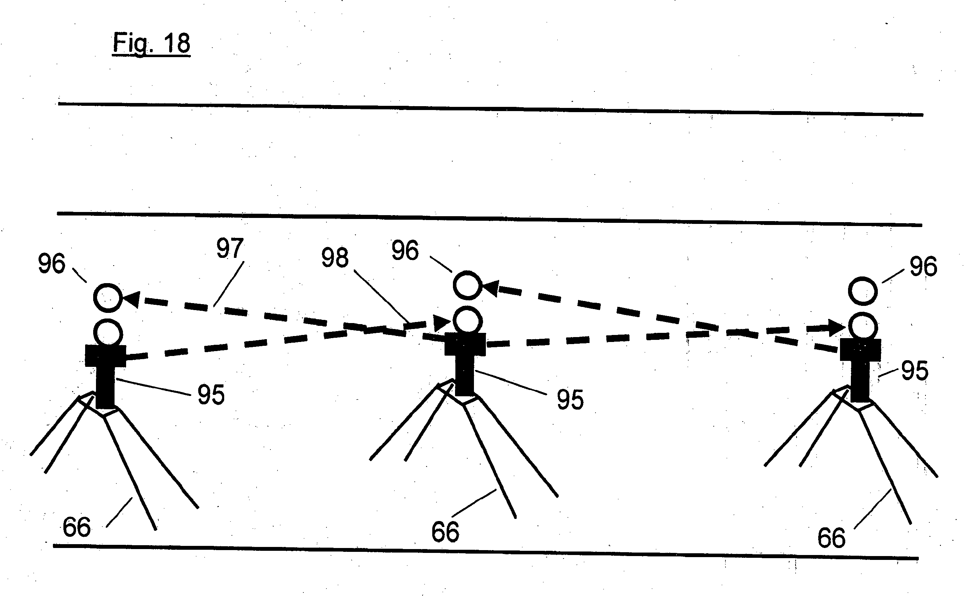

Fig. 18 zeigt noch ein weiteres Ausführungsbeispiel. In dem Ausführungsbeispiel finden Stative Anwendung 66, auf denen übereinander Messgeräte 95 und 96 montiert sind. Auch hier entstehen parallele, sich kreuzende Messungen 97 und 98, mit denen eine Kontrolle erfolgen kann.

Vorzugsweise wird das Tachymeter immer im Abstand von mindestens 1,5m von dem jeweils anvisierten Prisma aufgestellt. Dem liegt die Erkenntnis zugrunde, dass die Genauigkeit von Tachymetern nachlassen kann, wenn die Tachymeter sehr nah an einem Prisma aufgestellt werden. Der vom Nachlassen tangierte Bereich kann bei 0,2m Abstand von dem Prisma enden, kann aber auch bei einem Abstand von 1m oder 1,5 m enden. Im Ausführungsbeispiel wird nicht zwischen einzelnen Tachymetern differenziert, sondern ein Abstand eingehalten wird, bei dem alle vorkommenden Tachymeter ohne nachlassende Genauigkeit messen.

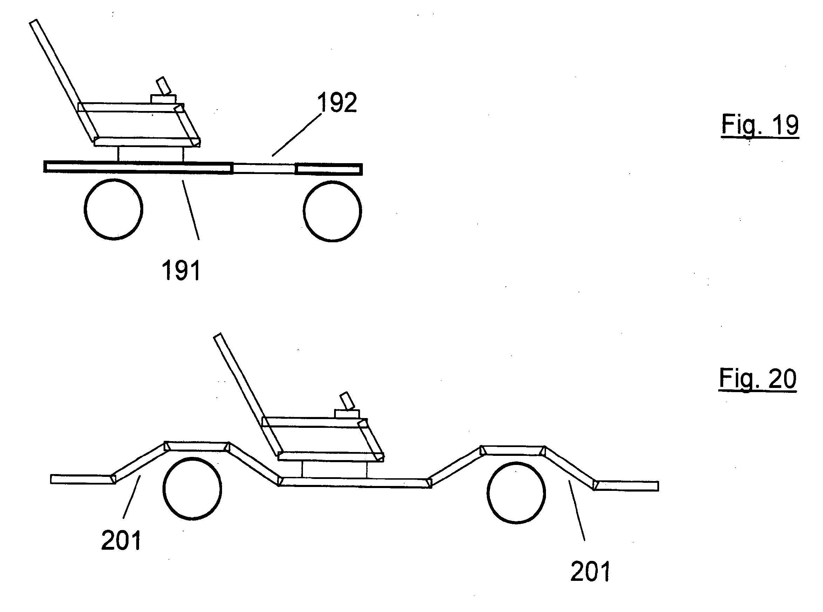

Fig. 19 zeigt ein vierrädriges Fahrzeug. Die Räder sind unter einer Bodenplatte 191 angeordnet, damit eine unbeabsichtigte Berührung während der Fahrt nicht Statt finden kann. In der Bodenplatte 191 befindet sich eine Aussparung 192. Damit sind Ablotungen durch die Bodenplatte auf einen darunter angeordneten Frosch möglich.

In einem Ausführungsbeispiel nach Fig. 20 befinden sich die Räder unter Kotflügeln 201. Beides trägt der Arbeitssicherheit Rechnung. Hand- und Fussverletzungen sind ausgeschlossen. Auf der Bodenplatte befinde sich ein drehbarer Sitz mit Steuerungseinrichtungen an der Armlehne. Durch die Verwendung von Kotflügeln lässt sich z.B. die Gesamtbauhöhe des Messwagens inklusiv der Mess- und Hubeinrichtungen reduzieren. Damit wird die Einsatzmöglichkeit gesteigert, können somit auch Vortriebe mit kleineren Rohrdurchmessern beherrscht werden.

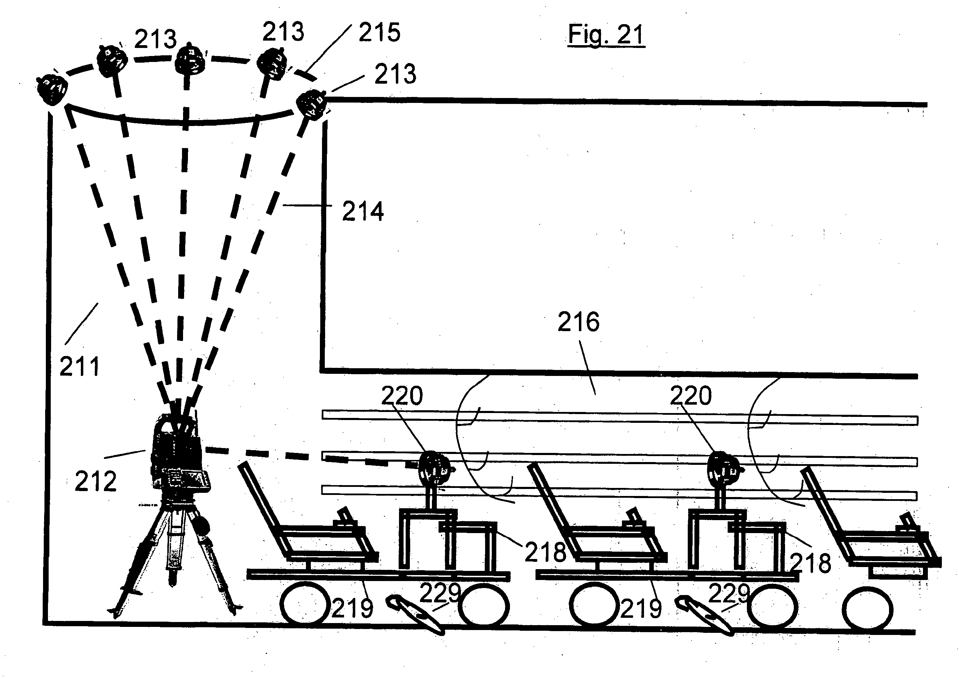

Vor der vorstehend beschriebenen Vermessung im Kanal findet jeweils eine Ablotung aus einem obertägigen Vermessungsnetz statt. Fig. 21 zeigt in schematischer Ansicht den Beginn eines Rohrvortriebes. Dabei ist zunächst ein Schacht 211 abgetäuft worden. Während des Abtäufens wird das Erreichen der Schachtsohle mit einem Tachymeter 212 gemessen. Dieser Tachymeter 21 besitzt einen Dreifuß zur Horizontierung. Als Dreifuß ist im Ausführungsbeispiel ein handelsüblicher Automatik Dreifuß mit der Bezeichnung AD-12 vorgesehen.

Zur Einmessung werden Messpunkte 213 an der Erdoberfläche oder am Baugrubenrand 215 genutzt. Die Messpunkte werden durch Prismen gebildet, die mit dem Tachymeter anvisiert werden. Die dabei erzeugten Messstrahlen sind mit 214 bezeichnet.

Der Tachymeter 212 wird auch benutzt, um von dem Standpunkt auf der Schachtsohle den Kanal zu vermessen. Dabei werden zunächst Prismen 220 vermessen, die auf Stativen 218 im Kanal angeordnet sind und auf die Messpunkte von Fröschen 229 abgelotet sind. Die Stative 218 sind mittels Fahrzeugen 219 in den Kanal transportiert worden.

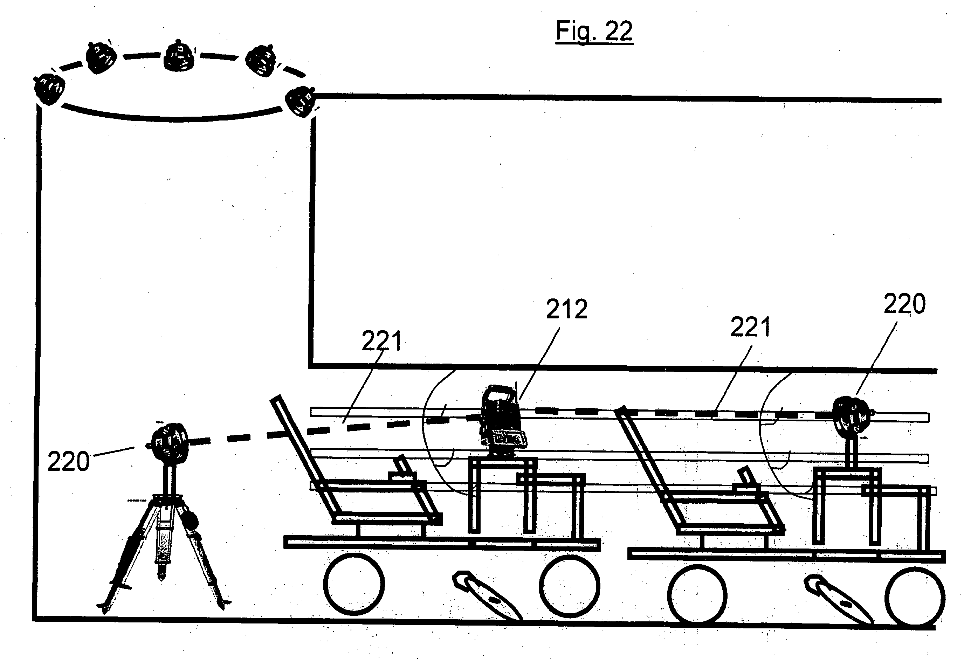

Nach der ersten Messung im Kanal wird das Prisma 229 des ersten Statives 219 im Kanal demontiert und gegen das Tachymeter 212 ausgetauscht. Das Tachymeter 212 ist zuvor von seinem Stativ im Schacht demontiert worden. An seine Stelle ist das demontierte Prisma 220 gelangt. Danach setzt eine Vermessung der beiden Prismen 220 vor und hinter dem Tachymeter 212 gemäss Fig. 22 ein.

Es ist von Vorteil, wenn schwenkfähige Prismen, insbesondere Prismen mit kardanischer Aufhängung verwendet werden, die in alle Richtungen schwenkfähig sind. Dann kann jedes Prisma auf das jeweils messende Tachymeter ausgerichtet werden.

## Patentansprüche

1. Verfahren zur Vermessung für unterirdische Bauwerke (211,216)wie Tunnel, Kanäle,
Bergwerksstrecken, Unterführungen,
wobei wahlweise ein Rohrvortrieb (1,2,3,4,5,6) oder ein Tübbingausbau stattfindet, insbesondere für die Vortriebssteuerung bei der Bauwerkserstellung oder zum Nachvermessen,
wobei der Ausbau ortsfest entsteht oder mit dem Vortrieb (1,2,3,4,5,6) durch den Untergrund bewegt wird und wobei die Bauwerke und/oder die Position der Vortriebseinrichtung (1,2,3,4,5,6) vermessen werden, **dadurch gekennzeichnet,**
**daß** verstellbare und/oder montierbare und demontierbare Messpunkte auf der Bauwerksohle angebracht werden,
wobei die Messpunkte
a) durch zumindest zeitweise bleibende Frösche (63) auf der Bauwerkssohle gebildet werden und Messgeräte (30,67,71,91,92,95,96) über die Frösche gebracht und berührungslos auf die Frösche (63) ausgerichtet werden oder unmittelbar oder mittelbar auf den Fröschen (63) aufgestellt werden oder
b) durch zumindest zeitweise bleibende Folien (229) auf der Bauwerkssohle gebildet werden und Messgeräte (30,67,71,91,92,95,96) über die Folien gebracht und berührungslos auf die Folien (229) ausgerichtet werden oder unmittelbar oder mittelbar auf den Folien (229) aufgestellt werden.

2. Vermessung nach Anspruch 1, **dadurch gekennzeichnet, dass**
zu einem Ziel hin schrittweise Messstrecken erzeugt werden, die sich über zwei oder mehr aufgestellte Messgeräte (30,67,71,91,92,95,96) erstrecken und
wobei die verschiedenen Messschritte einander überlappen und
wobei die einzelnen sich überlappenden Messstrecken sich zu einer Gesamt-Messstrecke ergänzen.

3. Vermessung nach Anspruch 2, **gekennzeichnet durch** die Verwendung von Fröschen (63) oder Folien (229) mit mehreren Messpunkten für parallele Messstrecken.

4. Vermessung nach einem der Ansprüche 1 bis 3, **dadurch gekennzeichnet, daß** bei Verwendung der Frösche (63) deren Aufhängung im Bauwerk im Bereich vorbestimmter Messstellen erfolgt.

5. Vermessung nach Anspruch 4, **gekennzeichnet durch** die Vorbestimmung der Messstellen bei der Bauwerksplanung.

6. Vermessung nach Anspruch 4 oder 5, **gekennzeichnet durch** die Verwendung von Haken zur Aufhängung der Frösche (63).

7. Vermessung nach Anspruch 6, **gekennzeichnet durch** die Verwendung von Fröschen (63) mit festen Ösen.

8. Vermessung nach einem der Ansprüche 4 bis 7, **gekennzeichnet durch** die Verwendung von Fröschen (63) mit festen Griffen.

9. Vermessung nach einem der Ansprüche 4 bis 8, **gekennzeichnet durch** den Verbleib der Frösche (63) oder Folien (229) auf der Bauwerkssohle bis zur Fertigstellung der gesamten Bauwerksvermessung.

10. Vermessung nach Anspruch 9, **gekennzeichnet durch** die Verwendung eines separaten Frosches (63) oder Folie (229) für jede Messstelle.

11. Vermessung nach einem der Ansprüche 1 bis 3, 5, 9,10, **gekennzeichnet durch** die Verklebung der Frösche (63) oder Folien (229) an der Bauwerkssohle.

12. Vermessung nach Anspruch 11, **gekennzeichnet durch** die Verwendung von Fröschen (63) oder Folien (229) mit klebriger Unterseite.

13. Vermessung nach Anspruch 12, **gekennzeichnet durch** die Verwendung von Fröschen (63) oder Folien (229), die an der Unterseite mit einem beidseitig klebrigen Klebeband (Doppelklebeband) versehen sind, wobei das Klebeband mit einer Seite auf der Unterseite der Frösche (63) oder Folien (229) angebracht wird und an der anderen Seite mit einer Abdeckung versehen ist, die vor dem Verkleben der Frösche (63) oder Folien (229) auf der Bauwerkssohle entfernt wird.

14. Vermessung nach Anspruch 13, **gekennzeichnet durch** die Verwendung von Fröschen (63) oder Folien (229), die mit Klebebandabschnitten versehen sind oder wobei das Klebeband auswechselbar ist oder wobei das Klebeband mit einer Abzuglasche versehen ist.

15. Vermessung nach einem der Ansprüche 9 bis 14, **dadurch gekennzeichnet, dass** nichtmetallische Frösche (63) oder nichtmetallische Folien (229) mit geringem Gewicht verwendet werden.

16. Vermessung nach einem der Ansprüche 1 bis 15, **gekennzeichnet durch** die Verwendung von Fröschen (63) oder Folien (229) mit aufgedrucktem Messpunkt.

17. Vermessung nach einem der Ansprüche 1 bis 16, **gekennzeichnet durch** den Transport der Messgeräte (30,67,71,91,92,95,96) von Messstelle zu Messstelle mit Fahrzeugen(35,65,70,210,219), wobei die Fahrzeuge (35,65,70,210,219) Stative (66,211) tragen, die an einer Messstelle abgesetzt und auf den dort liegenden Frosch (63) oder Folie (229) ausgerichtet werden, wobei die Stative (66,211) nach der Vermessung wieder mit dem Fahrzeug (35,65,70,210,219) aufgenommen und zur nächsten Messstelle verfahren werden.

18. Vermessung nach Anspruch 17, **gekennzeichnet durch** die Verwendung vierbeiniger Stative (66,211) und/oder **durch** Markierungen für Füsse der Stative (66,211) auf der Bauwerkssohle.

19. Vermessung nach Anspruch 17 oder 18, **gekennzeichnet durch** die Verwendung von Fahrzeugen (35,65,70,210,219) mit Hubvorrichtungen (218) für das Absetzen und Aufnehmen der Stative (66,211).

20. Vermessung nach einem der Ansprüche 17 bis 19, **dadurch gekennzeichnet, dass** die Stative (66,218) quer zur Bauwerkslämgsrichtung versetzt werden, um die Stative (66,218) für parallele Vermessungen auf unterschiedliche Messpunkte an den Messstellen auszurichten

21. Vermessung nach einem der Ansprüche 1 bis 16, **gekennzeichnet durch** die Verwendung von Fahrzeugen (35,65,70,210,219) mit den Messgeräten (30,67,71,91,92,95,96), die an einer Messstellung auf den dort liegenden Frosch (63) oder Folie (229) ausgerichtet werden.

22. Vermessung nach Anspruch 21, **dadurch gekennzeichnet, dass** die Fahrzeuge (35,65,70,210,219) für eine Vermessung auf der Bauwerkssohle abgestützt werden, wobei die Stützen für die Vermessung arretiert werden.

23. Vermessung nach einem der Ansprüche 21 bis 22, **gekennzeichnet durch** die Verwendung von mindestens einem Fahrzeug (35,65,70,210,219), vorzugsweise von zwei Fahrzeugen und noch weiter bevorzugt von drei Fahrzeugen (35,65,70,210,219).

24. Vermessung nach Anspruch 23, **gekennzeichnet durch** die Verwendung von gleich vielen verfahrbaren Vorrichtungen wie Messgeräte oder **durch** mindestens ein Fahrzeug (35,65,70,210,219), welches mehrere Messgeräte (30,67,71,91,92,95,96) für eine Messstrecke trägt.

25. Vermessung nach Anspruch 21 bis 24, **gekennzeichnet durch** die Verwendung eines Fahrzeuges (35,65,70,210,219), welches zumindest vorn und hinten ein Messgerät (30,67,71,91,92,95,96) trägt.

26. Vermessung nach einem der Ansprüche 1 bis 25, **dadurch gekennzeichnet, dass** das Bauwerk (211,216) beim Nachmessen auf der ganzen Länge neu vermessen wird.

27. Vermessung nach einem der Ansprüche 1 bis 25, **gekennzeichnet durch** eine Vermessung des Bauwerkes (211,216) beim Vortrieb und eine anschliessende Vermessung des Bauwerkes (211,216) in umgekehrter Richtung und einen Vergleich beider Messwerte.

28. Vermessung nach einem der Ansprüche 1 bis 27, **dadurch gekennzeichnet, daß** für die Vermessung zusätzlich Prismen verwendet werden, wobei die Prismen mit Stativen (66,211) gehalten werden oder wobei die Prismen (30,67,71,91,92,95,96) im Bauwerk (211,216) verklebt werden.

29. Vermessung nach einem der Ansprüche 1 bis 28, **dadurch gekennzeichnet, daß** für die Vermessung zusätzlich Prismen verwendet werden, wobei die Prismen (67,91,92,96,220) im Bauwerk (211,216) mit Magneten gehalten werden.

## Claims

1. Method for surveying underground construction sites (211,216) such as tunnels, sewers, mine galleries, subways,
wherein pipe jacking (1,2,3,4,5,6) or tubbing is optionally taking place, in particular for directional control in construction work or for re-surveying,
wherein the construction occurs at a fixed location or is moved with the pipe jack (1,2,3,4,5,6) through the subsurface and wherein the construction sites and/or the position of the pipe jack device (1,2,3,4,5,6) are surveyed, **characterised in that**,
adjustable and/or mountable and removable survey marks are fixed on the construction site floor,
wherein the survey marks
a) are formed by at least temporarily remaining change plates (63) on the construction site floor and measuring instruments (30,67,71,91,92,95,96) are placed over the change plates and contactlessly aligned onto the change plates (63) or directly or indirectly mounted on the change plates (63) or
b) are formed by at least temporarily remaining films (229) on the construction site floor, and measuring instruments (30,67,71,91,92,95,96) are placed over the films and contactlessly aligned onto the films (229) or directly or indirectly mounted on the films (229).

2. Surveying according to claim 1, **characterised in that** measurement paths toward a target are produced stepwise which extend over two or more mounted measuring instruments (30,67,71,91,92,95,96) and
wherein the various measurement steps overlap one another and
wherein the individual overlapping measurement paths complement each other to form a complete measurement path.

3. Surveying according to claim 2, **characterised by** the use of change plates (63) or films (229) with a plurality of survey marks for parallel measurement paths.

4. Surveying according to one of claims 1 to 3, **characterised in that** when change plates (63) are used they are suspended in the construction site in the area of predetermined measurement points.

5. Surveying according to claim 4, **characterised by** the designation of the measurement points in the construction site plan.

6. Surveying according to claim 4 or 5, **characterised by** the use of hooks for suspending the change plates (63).

7. Surveying according to claim 6, **characterised by** the use of change plates (63) with fixed loops.

8. Surveying according to one of claims 4 to 7, **characterised by** the use of change plates (63) with fixed grips.

9. Surveying according to one of claims 4 to 8, **characterised in that** the change plates (63) or films (229) remain on the construction site floor until the entire construction site survey is completed.

10. Surveying according to claim 9, **characterised by** the use of a separate change plate (63) or film (229) for each measurement point.

11. Surveying according to one of claims 1 to 3, 5, 9, 10, **characterised by** adhering the change plates (63) or films (229) to the construction site floor.

12. Surveying according to claim 11, **characterised by** the use of change plates (63) or films (229) with an adhesive lower surface.

13. Surveying according to claim 12, **characterised by** the use of change plates (63) or films (229), which are provided with an adhesive tape that is adhesive on both sides (double-sided adhesive tape), wherein the adhesive tape is attached with one side to the lower surface of the change plate (63) or film (229) and the other side is provided with a backing material that is removed prior to adhesively bonding the change plate (63) or film (229) to the construction site floor.

14. Surveying according to claim 13, **characterised by** the use of change plates (63) or films (229), which are provided with strips of adhesive tape or wherein the adhesive tape is replaceable or wherein the adhesive tape is provided with a pull-tab.

15. Surveying according to one of claims 9 to 14, **characterised in that** non-metallic change plates (63) or non-metallic films (229) with a low weight are used.

16. Surveying according to one of claims 1 to 15, **characterised by** the use of change plates (63) or films (229) having a printed survey mark on them.

17. Surveying according to one of claims 1 to 16, **characterised by** the transport of the measuring instruments (30,67,71,91,92,95,96) from measurement point to measurement point with vehicles (35,65,70,210,219), wherein the vehicles (35,65,70,210,219) carry stands (66,211) that are put down at a measurement point and aligned on the change plate (63) or film (229) located there, wherein after the surveying the stands (66,211) are again collected with the vehicle (35,65,70,210,219) and driven to the next measurement point.

18. Surveying according to claim 17, **characterised by** the use of four-legged stands (66,211) and/or by markings for the feet of the stands (66,211) on the construction site floor.

19. Surveying according to claim 17 or 18, **characterised by** the use of vehicles (35,65,70,210,219) with lifting gear (218) for offloading and loading the stands (66,211).

20. Surveying according to one of claims 17 to 19, **characterised in that** the stands (66,218) are transversely offset to the longitudinal direction of the construction site in order to align the stands (66,218) for parallel surveying on different survey marks at the measurement points.

21. Surveying according to one of claims 1 to 16, **characterised in that** the use of vehicles (35,65,70,210,219) with the measuring instruments (30,67,71,91,92,95,96) that are aligned on a measurement position on the change plate (63) or film (229) located there.

22. Surveying according to claim 21, **characterised in that** the vehicles (35,65,70,210,219) are supported on the construction site floor for a survey, wherein the supports for the survey are locked in place.

23. Surveying according to one of claims 21 to 22, **characterised by** the use of at least one vehicle (35,65,70,210,219), preferably by two vehicles and still more preferably by three vehicles (35,65,70,210,219).

24. Surveying according to claim 23, **characterised by** the use of a plurality of mobile devices, such as measuring instruments, or by at least one vehicle (35,65,70,210,219) that carries a plurality of measuring instruments (30,67,71,91,92,95,96) for a measurement path.

25. Surveying according to claim 21 to 24, **characterised by** the use of a vehicle (35,65,70,210,219) that at least in front and behind carries a measuring instrument (30,67,71,91,92,95,96).

26. Surveying according to one of claims 1 to 25, **characterised in that** the construction site (211,216) when re-measured is re-surveyed over the total length.

27. Surveying according to one of claims 1 to 25, **characterised by** a survey of the construction site (211,216) when pipe jacking and a subsequent survey of the construction site (211,216) in the opposite direction and a comparison of both measured values.

28. Surveying according to one of claims 1 to 27, **characterised in that** prisms are additionally used for the surveying, wherein the prisms are maintained with stands (66,211) or wherein the prisms (30,67,71,91,92,95,96) are adhesively bonded in the construction site (211,216).

29. Surveying according to one of claims 1 to 28, **characterised in that** prisms are additionally used for the surveying, wherein the prisms (67,91,92,96,220) are maintained in the construction site (211,216) with magnets.

## Revendications

1. Mesurage pour des constructions souterraines (211, 216) comme des tunnels, canaux, galeries de mines, passages souterrains, avec au choix un fonçage (1, 2, 3, 4, 5, 6) ou un cuvelage, en particulier pour la commande d'avancement lors de la réalisation de construction ou afin de refaire des mesures, l'aménagement se produisant de manière fixe sur place ou étant mobile avec l'avancement (1, 2, 3, 4, 5, 6) à travers le sous-sol et les constructions et/ou la position du dispositif d'avancement (1, 2, 3, 4, 5, 6) étant mesuré(e)s, **caractérisé en ce que** des points de mesure pouvant être réglés et/ou montés et démontés sont placés sur le radier de construction, les points de mesure
a) étant formés sur le radier de construction par des embases crapaud (63) restant au moins temporairement et des appareils de mesure (30, 67, 71, 91, 92, 95, 96) étant placés sur les embases crapaud et orientés sans contact sur les embases crapaud (63) ou placés directement ou indirectement sur les embases crapaud (63), ou,
b) étant formés sur le radier de construction par des films (229) restant au moins temporairement et des appareils de mesure (30, 67, 71, 91, 92, 95, 96) étant placés sur les films et orientés sans contact sur les films (229) ou placés directement ou indirectement sur les films (229).

2. Mesurage selon la revendication 1, **caractérisé en ce que** des sections de mesure sont créées par étape jusqu'à une cible qui s'étendent par le biais de deux ou plusieurs appareils de mesure (30, 67, 71, 91, 92, 95, 96) placés, et les différentes étapes de mesure se chevauchant les unes et autres, et chacune des sections de mesure se chevauchant, se complétant pour devenir une section de mesure entière.

3. Mesurage selon la revendication 2, **caractérisé par** l'utilisation d'embases crapaud (63) ou films (229) avec plusieurs points de mesure pour des sections de mesure parallèles.

4. Mesurage selon l'une des revendications 1 à 3, **caractérisé en ce qu'**en utilisant des embases crapaud (63), leur accrochage s'effectue dans la construction dans la zone d'endroits de mesure prédéfinis.

5. Mesurage selon la revendication 4, **caractérisé par** la prédéfinition des endroits de mesure lors de la conception de la construction.

6. Mesurage selon la revendication 4 ou 6, **caractérisé par** l'utilisation de crochets pour accrocher les embases crapaud (63).

7. Mesurage selon la revendication 6, **caractérisé par** l'utilisation d'embases crapaud (63) avec des oeillets fixes.

8. Mesurage selon l'une des revendications 4 à 7, **caractérisé par** l'utilisation d'embases crapaud (63) avec des prises fixes.

9. Mesurage selon l'une des revendications 4 à 8, **caractérisé par** le maintien des embases crapaud (63) ou des films (229) sur le radier de construction jusqu'à l'achèvement de tout le mesurage de la construction.

10. Mesurage selon la revendication 9, **caractérisé par** l'utilisation d'une embase crapaud (63) ou de film (229) séparé(e) pour chaque endroit de mesure.

11. Mesurage selon l'une des revendications 1 à 3, 5, 9, 10, **caractérisé par** le collage des embases crapaud (63) ou des films (229) au niveau du radier de construction.

12. Mesurage selon la revendication 11, **caractérisé par** l'utilisation d'embases crapaud (63) ou de films (229) avec un dessous adhésif.

13. Mesurage selon la revendication 12, **caractérisé par** l'utilisation d'embases crapaud (63) ou de films (229) qui sont muni(e)s au niveau du dessous d'une bande adhésive collante des deux côtés (bande adhésive double face), la bande adhésive étant appliquée avec un côté sur le dessous des embases crapaud (63) ou des films (229), et munie de l'autre côté d'un revêtement qui est retiré avant le collage des embases crapaud (63) ou des films (229) sur le radier de construction.

14. Mesurage selon la revendication 13, **caractérisé par** l'utilisation d'embases crapaud (63) ou de films (229) qui sont muni(e)s de sections de bande adhésive ou la bande adhésive étant interchangeable ou la bande adhésive étant munie d'une languette de décollement.

15. Mesurage selon l'une des revendications 9 à 14, **caractérisé en ce que** sont employé(e)s des embases crapaud (63) non métalliques ou des films (229) non métalliques de faible poids.

16. Mesurage selon l'une des revendications 1 à 15, **caractérisé par** l'utilisation d'embases crapaud (63) ou de films (229) à point de mesure imprimé.

17. Mesurage selon l'une des revendications 1 à 16, **caractérisé par** le transport des appareils de mesure (30, 67, 71, 91, 92, 95, 96) d'un endroit de mesure à l'autre, avec des véhicules (35, 65, 70, 210, 219), les véhicules (35, 65, 70, 210, 219) portant des supports (66, 211), qui sont déposés au sol au niveau d'un endroit de mesure et sont orientés sur l'embase crapaud (63) ou le film (229) placé(e) là, les supports (66, 211) étant repris après le mesurage avec le véhicule (35, 65, 70, 210, 219) et déplacés à l'endroit de mesure suivant.

18. Mesurage selon la revendication 17, **caractérisé par** l'utilisation de supports (66, 211) à quatre pieds et/ou de marquages pour des pieds de supports (66, 211) sur le radier de construction.

19. Mesurage selon la revendication 17 ou 18, **caractérisé par** l'utilisation de véhicules (35, 65, 70, 210, 219) avec des dispositifs de levage (218) pour déposer et reprendre les supports (66, 211).

20. Mesurage selon l'une des revendications 17 à 19, **caractérisé en ce que** les supports (66, 211) sont déplacés transversalement à la direction longitudinale de la construction, afin d'orienter les supports (66, 211) pour des mesurages parallèles sur différents points de mesure, au niveau des endroits de mesure.

21. Mesurage selon l'une des revendications 1 à 16, **caractérisé par** l'utilisation de véhicules (35, 65, 70, 210, 219) avec les appareils de mesure (30, 67, 71, 91, 92, 95, 96) qui sont orientés au niveau d'une position de mesure sur l'embase crapaud (63) ou film (229) ici placé(e).

22. Mesurage selon la revendication 21, **caractérisé en ce que** les véhicules (35, 65, 70, 210, 219) sont appuyés pour un mesurage sur le radier de construction, les appuis étant arrêtés pour le mesurage.

23. Mesurage selon l'une des revendications 21 à 22, **caractérisé par** l'utilisation d'au moins un véhicule (35, 65, 70, 210, 219), de préférence de deux véhicules et de préférence, encore, de trois véhicules (35, 65, 70, 210, 219).

24. Mesurage selon la revendication 23, **caractérisé par** l'utilisation de nombreux dispositifs mobiles similaires, comme des appareils de mesure ou d'au moins un véhicule (35, 65, 70, 210, 219), lequel porte plusieurs appareils de mesure (30, 67, 71, 91, 92, 95, 96) pour une section de mesure.

25. Mesurage selon l'une des revendications 21 à 24, **caractérisé par** l'utilisation d'un véhicule (35, 65, 70, 210, 219), lequel porte au moins devant et derrière un appareil de mesure (30, 67, 71, 91, 92, 95, 96).

26. Mesurage selon l'une des revendications 1 à 25, **caractérisé en ce que** la construction (211, 216) est de nouveau mesurée lors de la vérification de la mesure, sur toute la longueur.

27. Mesurage selon l'une des revendications 1 à 25, **caractérisé par** un mesurage de la construction (211, 216) lors de l'avancement et d'un mesurage ultérieur de la construction (211, 216) en sens inverse et une comparaison des deux valeurs mesurées.

28. Mesurage selon l'une des revendications 1 à 27, **caractérisé en ce que**, pour le mesurage, des prismes supplémentaires sont utilisés, les prismes étant tenus avec des supports (66, 211) ou les prismes (30, 67, 71, 91, 92, 95, 96) étant collés dans la construction (211, 216).

29. Mesurage selon l'une des revendications 1 à 28, **caractérisé en ce que**, pour le mesurage, des prismes supplémentaires sont utilisés, les prismes (67, 91, 92, 96, 220) étant fixés à la construction (211, 216) avec des aimants,
